(19) **Europäisches Patentamt**
**European Patent Office**
**Office européen des brevets**

(11) **EP 4 437 304 B1**

(12) **EUROPÄISCHE PATENTSCHRIFT**

(45) Veröffentlichungstag und Bekanntmachung des Hinweises auf die Patenterteilung:
**31.12.2025   Patentblatt 2026/01**

(21) Anmeldenummer: **22821909.3**

(22) Anmeldetag: **22.11.2022**

(51) Internationale Patentklassifikation (IPC):
**G01B 11/00** (2006.01)     **G01B 11/26** (2006.01)
**B25J 9/16** (2006.01)

(52) Gemeinsame Patentklassifikation (CPC):
**G01B 11/002; B25J 9/1623; B25J 9/1692; G01B 11/26**

(86) Internationale Anmeldenummer:
**PCT/EP2022/082765**

(87) Internationale Veröffentlichungsnummer:
**WO 2023/094366 (01.06.2023 Gazette 2023/22)**

(54) **POSENBESTIMMUNG BEI PARALLELKINEMATIKEN MIT REFERENZMARKERN**

POSE DETERMINATION IN PARALLEL KINEMATICS SYSTEMS WITH REFERENCE MARKERS

DÉTERMINATION DE POSE DANS DES SYSTÈMES CINÉMATIQUES PARALLÈLES DOTÉS DE MARQUEURS DE RÉFÉRENCE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **26.11.2021   DE 102021213358**

(43) Veröffentlichungstag der Anmeldung:
**02.10.2024   Patentblatt 2024/40**

(73) Patentinhaber: **Physik Instrumente (PI) SE & Co. KG**
**76228 Karlsruhe (DE)**

(72) Erfinder:
- **SCHULZ, Stefan**
  **76327 Pfinztal (DE)**
- **SCHEMPP, Constantin**
  **74199 Donnbronn (DE)**

(74) Vertreter: **Grünecker Patent- und Rechtsanwälte PartG mbB**
**Leopoldstraße 4**
**80802 München (DE)**

(56) Entgegenhaltungen:
**CN-A- 104 731 103**

- **MEDEIROS RODRIGO ALVES ET AL: "An Embedded Quaternion-Based Extended Kalman Filter Pose Estimation for Six Degrees of Freedom Systems", JOURNAL OF INTELLIGENT, SPRINGER NETHERLANDS, DORDRECHT, vol. 102, no. 1, 22 April 2021 (2021-04-22), XP037431234, ISSN: 0921-0296, [retrieved on 20210422], DOI: 10.1007/S10846-021-01377-3**
- **ZHANG XUANCHEN ET AL: "Stereo vision based autonomous robot calibration", ROBOTICS AND AUTONOMOUS SYSTEMS, vol. 93, 1 July 2017 (2017-07-01), AMSTERDAM, NL, pages 43 - 51, XP093006864, ISSN: 0921-8890, DOI: 10.1016/ j.robot.2017.04.001**

EP 4 437 304 B1

**Beschreibung**

Die vorliegende Erfindung betrifft Vorrichtungen und Verfahren zum Bestimmen der Pose von parallelen Kinematiken.

Ein häufig auftauchendes Problem bei der Steuerung und Regelung eines Roboters ist die Bestimmung seiner aktuellen Pose (Position und Orientierung).

Insbesondere bei Parallelkinematiken kann allerdings häufig die Pose, also die Lage und Orientierung z.B. der beweglichen Arbeitsplattform eines Hexapoden, aus den Längen der angetriebenen Beine bzw. Gelenkwinkeln nicht direkt und/oder exakt berechnet werden. Stattdessen sind hierfür numerische Verfahren, z.B. iterative Optimierungsverfahren notwendig. Zum einen sind diese Verfahren aber zeitaufwändig bzw. rechenintensiv, und die erreichbare Genauigkeit hängt maßgeblich von der verwendeten Anfangsschätzung ab. Zum anderen basieren sie meist auf einer Messung der Beinlängen und/oder Gelenkwinkel mittels interner Sensoren (z.B. Inkrementalsensoren für die Messung der Beinlängen eines Hexapoden), wodurch Einflüsse wie Versatz, Verformung, Spiel und Gegenspiel (Backlash) in den Beinen, den Gelenken und/oder der beweglichen Plattform selbst nicht detektiert werden (selbst bei Absolutsensoren in den Beinen) und somit von einem darauf aufbauenden numerischen Verfahren auch nicht berücksichtigt werden können. Ferner sind z.B. bei Inkrementalsensoren aufwändige Referenzfahrten notwendig, um eine Nullposition der Beine zu erreichen, und es gibt spezielle Parallelkinematiken für die keine numerischen Verfahren zu Verfügung stehen.

Werden hingegen externe, optische Inkremental- und Absolutsensoren verwendet, sind meist eine Vielzahl von Sensoren notwendig, um alle Freiheitsgrade messen zu können. Ebenso lassen sich häufig, bedingt durch den eingeschränkten Messbereich der Sensoren, keine großen Stellbewegungen der Parallelkinematik erreichen.

Bei Verwendung einer 6D-Messtechnik mittels Photogrammetrie ist häufig eine Vielzahl von Bildern aus möglichst vielen verschiedenen Positionen notwendig, um einen exakten 3D-Scan zu generieren. Da hierbei ein vergleichsweise großer Bereich aufgenommen werden muss, ist aber nur eine relativ niedrige Genauigkeit erreichbar, bzw. eine extrem große Auflösung der Kamera notwendig, um Lageänderungen z.B. im Nanometerbereich detektieren zu können.

Moldagalieva, Akmaral, et al. "Computer vision-based pose estimation of tensegrity robots using fiducial markers." 2019 IEEE/SICE International Symposium on System Integration (Sil). IEEE, 2019, offenbart eine auf *"Fiducial Tags"* basierende Methode, bei der versucht wird, den ganzen Arbeitsraum des Roboters im Blick (im Bildbereich) der Kamera zu behalten. Dies hat zur Folge, dass der Blickbereich der Kamera sehr groß sein muss, und daher die Kamera recht weit von der beweglichen Arbeitsplattform entfernt aufgebaut werden muss. Da sich bei gegebener Auflösung der Kamera die erreichbare Genauigkeit mit zunehmendem Abstand der Kamera vom Tag reduziert, kann mit dieser Methode die Pose der Kinematik daher nur mit einer geringen Genauigkeit bestimmt werden.

Der vorliegenden Erfindung liegt somit die Aufgabe zugrunde, die Bestimmung der Pose von parallelen Kinematiken zu verbessern.

Die Aufgabe wird erfindungsgemäß mit den Merkmalen der unabhängigen Patentansprüche gelöst. Einige vorteilhafte Ausführungsformen sind Gegenstand der abhängigen Patentansprüche.

Der Erfindung liegt der Gedanke zugrunde, mehrere Referenzmarker auf einer Parallelkinematik so anzubringen, dass sich stets mindestens einer der Referenzmarker oder eine bestimmte Mindestanzahl an Referenzmarkern im Sichtfeld der Kamera befindet.

Gemäß einem ersten Aspekt der vorliegenden Erfindung wird eine Parallelkinematik bereitgestellt. Die Parallelkinematik umfasst eine Kamera und einen Markierungsbereich mit wechselseitig unterscheidbaren Markierungen, wobei die Kamera dazu eingerichtet ist, den Markierungsbereich bei unterschiedlichen Posen (oder sogar bei sämtlichen möglichen Posen) der Parallelkinematik zu beobachten. Die Pose der Parallelkinematik lässt sich basierend auf einem mit der Kamera aufgenommen Bild des Markierungsbereichs bestimmen, falls das Bild mindestens n beliebige der Markierungen enthält in einer Richtung , wobei $n$ größer gleich 1 ist. Hierbei genügt der Abstand D zwischen je zwei in der Richtung benachbarten Markierungen der Formel $\frac{FOV_{\min} - (n+2) * t_m}{n+1} < D \leq \frac{FOV_{\min} - (n+1) * t_m}{n}$, wobei $t_m$ die Länge einer der Markierungen ist, $FOV_{\min}$ die Länge des Ausschnitts des Markierungsbereichs ist, der bei einem Minimalabstand der Kamera von dem Markierungsbereich in das Sichtfeld der Kamera fällt, und der Minimalabstand der minimale Abstand unter den Abständen ist, die der Markierungsbereich von der Kamera durch Änderungen der Pose entfernt sein kann.

Gemäß einem zweiten Aspekt der vorliegenden Erfindung wird ein Verfahren zum Anbringen von wechselseitig unterscheidbaren Markierungen an eine Parallelkinematik in einem Markierungsbereich bereitgestellt, so dass sich die Pose der Parallelkinematik basierend auf einem Bild des Markierungsbereichs bestimmen lässt, falls sich mindestens eine vorgegebene Anzahl, $n$, der Markierungen in einer Richtung auf dem Bild befindet. Das Verfahren umfasst einen Schritt des Bestimmens des Abstands D zwischen je zwei in der Richtung benachbarten Markierungen gemäß der Formel:

$\frac{FOV_{\min} - (n+2) * t_m}{n+1} < D \leq \frac{FOV_{\min} - (n+1) * t_m}{n}$, wobei $t_m$ die Länge einer der Markierungen ist, $FOV_{\min}$ die Länge des

Ausschnitts des Markierungsbereichs ist, der bei einem Minimalabstand der Kamera von dem Markierungsbereich in das Sichtfeld der Kamera fällt, wobei der Minimalabstand der minimale Abstand unter den Abständen ist, die der Markierungsbereich von der Kamera durch Änderungen der Pose entfernt sein kann. Das Verfahren umfasst ferner einen Schritt des Anbringens jeweils benachbarter Markierungen in dem bestimmten Abstand.

Gemäß einem dritten Aspekt der vorliegenden Erfindung wird eine Parallelkinematik bereitgestellt. Die Parallelkinematik umfasst eine Kamera und einen Markierungsbereich mit daran angebrachten wechselseitig unterscheidbaren Markierungen, wobei die Kamera dazu eingerichtet ist, den Markierungsbereich bei unterschiedlichen Posen (oder sogar bei sämtlichen möglichen Posen) der Parallelkinematik zu beobachten. Hierbei genügt der Abstand D zwischen je zwei in einer Richtung benachbarten Markierungen der Formel $D \leq \frac{FOV_{\min} - (n+1)*t_m}{n}$, wobei $t_m$ die Länge einer der Markierungen ist, $FOV_{\min}$ die Länge des Ausschnitts des Markierungsbereichs ist, der bei einem Minimalabstand der Kamera von dem Markierungsbereich in das Sichtfeld der Kamera fällt, und der Minimalabstand der minimale Abstand unter den Abständen ist, die der Markierungsbereich von der Kamera durch Änderungen der Pose entfernt sein kann. Ferner befinden sich die Markierungen in unterschiedlichen Ebenen und die Pose der Parallelkinematik lässt sich basierend auf einem mit der Kamera aufgenommen Bild bestimmen, falls dieses mindestens eine Anzahl, *n*, beliebige der Markierungen in der Richtung enthält, wobei n größer gleich 2 ist.

Gemäß einem vierten Aspekt der vorliegenden Erfindung wird ein Verfahren zum Anbringen von wechselseitig unterscheidbaren Markierungen an eine Parallelkinematik in einem Markierungsbereich bereitgestellt, so dass sich die Pose der Parallelkinematik basierend auf einem mit einer Kamera aufgenommen Bild des Markierungsbereichs bestimmen lässt, falls sich mindestens eine vorgegebene Anzahl, *n*, der Markierungen auf dem Bild in einer Richtung befindet, wobei n größer gleich 2 ist. Das Verfahren umfasst einen Schritt des Bestimmens des Abstands D zwischen je zwei in der Richtung benachbarten Markierungen gemäß der Formel: $D \leq \frac{FOV_{\min} - (n+1)*t_m}{n}$, wobei $t_m$ die Länge einer der Markierungen ist, $FOV_{\min}$ die Länge des Ausschnitts des Markierungsbereichs ist, der bei einem Minimalabstand der Kamera von dem Markierungsbereich in das Sichtfeld der Kamera fällt, wobei der Minimalabstand der minimale Abstand unter den Abständen ist, die der Markierungsbereich von der Kamera durch Änderungen der Pose entfernt sein kann. Das Verfahren umfasst ferner einen Schritt des Anbringens jeweils in der Richtung benachbarter Markierungen in dem bestimmten Abstand, wobei die Markierungen so angebracht werden, dass sie sich in unterschiedlichen Ebenen befinden.

Im Allgemeinen, in Ausführungsformen des ersten bis vierten Aspekts, kann die Länge $FOV_{\min}$ der Gleichung $FOV_{\min} = \left(\frac{g_{\min}}{f} - 1\right) l_{\text{Sensor}}$ genügen, wobei $g_{\min}$ der Minimalabstand ist, $l_{\text{Sensor}}$ eine Länge des Sensors der Kamera ist, und f die Brennweite der Kamera ist.

Im Allgemeinen, in Ausführungsformen des ersten und dritten Aspekts, können die Markierungen gemäß einem regelmäßigen Anordnungsschema in dem Markierungsbereich angeordnet sein.

Im Allgemeinen, in Ausführungsformen des zweiten und vierten Aspekts, können die Markierungen, im Schritt des Anbringens, gemäß einem regelmäßigen Anordnungsschema in dem Markierungsbereich angebracht werden.

Im Allgemeinen, in Ausführungsformen des ersten und dritten Aspekts, kann der Markierungsbereich an der Unterseite der Arbeitsplattform der Parallelkinematik angebracht sein, und die Kamera in oder an einer Basis der Parallelkinematik angebracht und auf die Unterseite der Arbeitsplattform gerichtet sein.

Im Allgemeinen, in Ausführungsformen des ersten und dritten Aspekts, kann der Markierungsbereich in oder an einer Basis der Parallelkinematik und die Kamera an der Unterseite der Arbeitsplattform der Parallelkinematik angebracht sein, und die Kamera auf die Basis der Parallelkinematik gerichtet sein. Alternativ kann in Ausführungsformen des ersten und dritten Aspekts im Schritt des Anbringens des Markierungsbereichs dieser in oder an einer Basis der Parallelkinematik angebracht sein, und die Kamera an der Unterseite der Arbeitsplattform der Parallelkinematik angebracht und auf die Basis der Parallelkinematik gerichtet sein.

Im Allgemeinen, in Ausführungsformen des zweiten und vierten Aspekts, kann im Schritt des Anbringens des Markierungsbereichs dieser an der Unterseite der Arbeitsplattform der Parallelkinematik angebracht werden, und/oder die Kamera in oder an einer Basis der Parallelkinematik angebracht und auf die Unterseite der Arbeitsplattform gerichtet werden. Alternativ kann in Ausführungsformen des zweiten und vierten Aspekts im Schritt des Anbringens des Markierungsbereichs dieser in oder an einer Basis der Parallelkinematik angebracht werden, und die Kamera an der Unterseite der Arbeitsplattform der Parallelkinematik angebracht und auf die Basis der Parallelkinematik gerichtet werden.

Im Allgemeinen, in Ausführungsformen des ersten bis vierten Aspekts, die Länge $t_m$ einer Markierung der Gleichung $t_m \geq px * p * t_b * \left(\frac{g_{\max}}{f} - 1\right)$ genügen, wobei p ein von der Kamera abhängiger Wert größer gleich 2 und kleiner gleich 5 ist, *px* die Länge, die einem Abtastwert der Kamera entspricht ist, $g_{\max}$ der maximaler Abstand unter den Abständen ist, die der Markierungsbereich von der Kamera durch Änderungen der Pose entfernt sein kann, $f$ eine Brennweite der Kamera ist, und $t_b$ die Anzahl an Informationseinheiten der Markierung ist.

Im Allgemeinen, in Ausführungsformen des ersten bis vierten Aspekts, kann es sich bei den Markierungen um Referenzmarker, wie zum Beispiel ARToolKit-Markierungen, ArUco-Markierungen, QR-Codes oder insbesondere April-Tag-Markierungen handeln.

Im Allgemeinen, in Ausführungsformen des ersten bis vierten Aspekts, kann jede der Markierungen aus mehreren Quadraten bestehen, wobei die Quadrate den Informationseinheiten entsprechen und in jedem Quadrat ein Bit kodierbar ist.

Weitere Einzelheiten, Vorteile und Merkmale der Erfindung ergeben sich aus der folgenden Beschreibung und den Zeichnungen, auf die bezüglich aller nicht im Text beschriebenen Einzelheiten ausdrücklich verwiesen wird. Es zeigen:

Fig. 1a und b    schematische dreidimensionale Darstellungen einer beispielhaften Parallelkinematik.

Fig. 2a und b    schematische Schnittdarstellungen einer beispielhaften Parallelkinematik.

Fig. 3    ein Flussdiagram, das bespielhafte Schritte zum Anbringen vom Markierungen Im Markierungsbereich zeigt.

Fig. 4    eine schematische Darstellung des sichtbaren Ausschnitts des Markierungsbereichs bei Änderungen der Pose der Kinematik.

Fig. 5    eine schematische Darstellung von einem minimalen Sichtfeld eines Markierungsbereichs bei verschiedenen Auslenkungen in x- und y-Richtung sowie einem entsprechenden maximalen Sichtfeld; die Abstände der Markierungen sind so gewählt, dass mindestens 1 und im Grenzfall 4 Markierungen vollständig zu sehen sind.

Fig. 6    eine schematische Darstellung von einem minimalen Sichtfeld bei verschiedenen Auslenkungen in x- und y-Richtung sowie einem entsprechenden maximalen Sichtfeld; die Abstände der Markierungen sind so gewählt, dass mindestens 4 und im Grenzfall 9 Markierungen vollständig zu sehen sind.

Fig. 7a und b    schematischen Darstellungen von Markierungsbereichen, in denen die Markierungen gleichmäßig angeordnet sind.

Fig. 8    eine beispielhafte Markierung.

Fig. 9    den Sichtbereich eines Markierungsbereichs, bei dem im Grenzfall mehr (d.h. $(n_x + 1) = (n_y + 1) = 3$ in x- bzw. y-Richtung) als die gewünschte Mindestanzahl $n_x = n_y = 2$ an Markierungen in x- und y-Richtung vollständig zu sehen ist.

Fig. 10    einen Sichtbereich, der um eine kleine Auslenkung nach links unten gegenüber dem Sichtbereich in Fig. 9 verschoben ist; es sind somit wieder nur $n_x = n_y = 2$ Markierungen in x- und y-Richtung vollständig zu sehen.

Fig. 11a    den Sichtbereich eines Markierungsbereichs, bei dem im Grenzfall mehr (d.h. insgesamt 4) als die gewünschte Mindestanzahl $n_x = n_y = 1$ an Markierungen in x- und y- Richtung vollständig zu sehen ist;

Fig. 11b    den Sichtbereich aus Fig. 11a nach einer Vergrößerung der Abstände zwischen den Markierungen in x- und y- Richtung um $2t_m$, wodurch im Grenzfall keine Markierung mehr vollständig zu sehen ist.

Fig. 12    eine schematische Darstellung zur Bestimmung des Abstands zwischen den Markierungen bei Berücksichtigung von Rotationen.

Fig. 13a bis d    Markierungsbereiche, bei denen die Markierungen in verschiedenen Ebenen angeordnet sind.

Fig. 13e    eine schematische Darstellung eines periodischen Musters gemäß dem die Markierungen in drei verschiedenen Ebenen angebracht werden können.

Fig. 14    eine schematische Darstellung der Vergrößerung des Arbeitsbereichs, der durch Verwendung mehrerer Ebenen, in denen sie Markierungen angebracht werden, abgedeckt werden kann.

Die vorliegende Erfindung betrifft Parallelkinematiken an denen Markierungen angebracht sind, sowie Verfahren zum Anbringen von Markierungen an Parallelkinematiken.

### Parallelkinematiken

Man unterscheidet in der Robotertechnik grundsätzlich zwischen den Hauptklassen der seriellen und der parallelen Kinematik. Ferner gibt es auch hybride Kinematiken, welche eine Kombination aus serieller und paralleler Kinematik darstellen. Während serielle Kinematiken aus einer Aneinanderreihung von Gliedern (z.B. Linearachsen und/oder rotatorische Achsen) zu einer offenen kinematischen Kette bestehen, bestehen die in der vorliegenden Anmeldung betrachteten Parallelkinematiken aus einer Anzahl geschlossener kinematischer Ketten. In der Praxis werden für die parallel verlaufenden Bewegungsachsen häufig parallele Stabkinematiken, Stabaktoren und/oder Rotationsaktoren eingesetzt, die zwei relativ zueinander zu bewegenden Ebenen miteinander koppeln. Es ist somit jeder Antrieb direkt mit dem (End-) Effektor (z.B. einem Werkzeugträger) verbunden. Dadurch werden die Antriebe nicht wie bei einer seriellen Kinematik mit den Massen aller folgenden Glieder und Antriebe belastet. Da alle Antriebe gleichzeitig, also parallel zueinander, bewegt werden, teilen sich die Belastungen gleichmäßig(er) auf alle Führungselemente auf. Die daraus resultierenden geringen bewegten Eigenmassen ermöglichen eine extreme Dynamik mit hohen Geschwindigkeiten und Beschleunigungen bei gleichzeitig hoher Präzision der Mechanik. Ein weiterer Unterschied zu seriellen Mechaniken besteht darin, dass bei einer Parallelkinematik Antriebe, insbesondere die Motoren und Getriebe, ortsfest bleiben. Dies optimiert nicht nur die Dynamik und Leistung derartiger Roboter, sondern auch deren Energiebilanz. Parallelkinematiken werden daher gerne eingesetzt, wenn einfache Bewegungsabläufe mit hoher Wiederholgenauigkeit und Geschwindigkeit gefordert sind. Klassische Beispiele für Parallelkinematiken sind Hexapoden und Delta-Roboter. Es ist an dieser Stelle angemerkt, dass das in der vorliegenden Anmeldung häufig verwendete Beispiel eines Hexapoden lediglich der Veranschaulichung dient und sich das Gesagte im Allgemeinen auch für andere Parallelkinematiken gilt.

### Ausführungsbeispiele

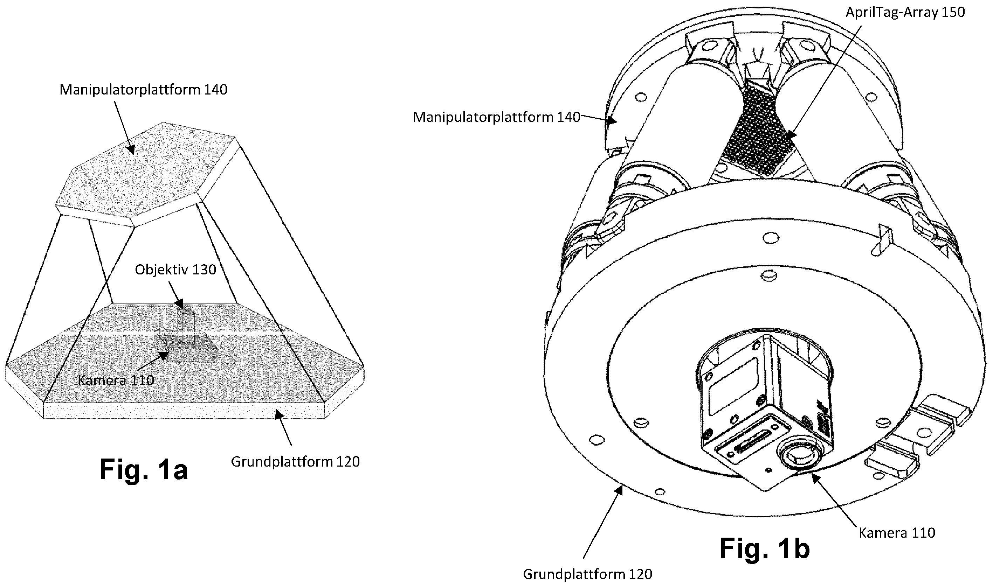

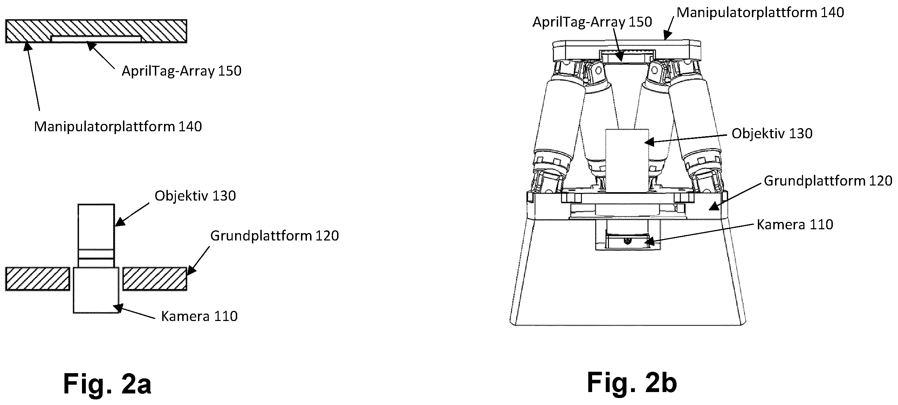

Gemäß einem Ausführungsbeispiel der vorliegenden Erfindung wird eine Parallelkinematik zur Verfügung gestellt. Die Parallelkinematik umfasst, wie beispielhaft in **Fig. 1, 2a und 2b** dargestellt, eine Kamera 110, die dazu eingerichtet ist, einen mit einer Pose der Parallelkinematik mitbewegten Markierungsbereich 150 der Parallelkinematik zu beobachten. Die Parallelkinematik umfasst ferner wechselseitig unterscheidbare Markierungen, die an der Parallelkinematik in dem Markierungsbereich 150 angebracht sind.

Die Markierungen sind dabei im Markierungsbereich entweder:

- mit einem Abstand $D$ zwischen je zwei in einer Richtung benachbarten Markierungen angebracht, der der Formel

$$\frac{FOV_{\min} - (n+2) * t_m}{n+1} < D \leq \frac{FOV_{\min} - (n+1) * t_m}{n}$$ genügt, wobei sich die Pose der Parallelkinematik basierend auf einem mit der Kamera 110 aufgenommen Bild des Markierungsbereichs bestimmen lässt, falls das Bild mindestens $n$ beliebige der Markierungen in der Richtung enthält, wobei $n$ größer gleich 1 ist; oder

- in unterschiedlichen Ebenen angebracht, wobei der Abstand $D$ zwischen je zwei in einer Richtung benachbarten Markierungen der Formel $D \leq \frac{FOV_{\min} - (n+1) * t_m}{n}$ genügt, und sich die Pose der Parallelkinematik basierend auf einem (z.B. einem beliebigem oder jedem einzelnen) mit der Kamera aufgenommen Bild bestimmen lässt, falls diese mindestens eine Anzahl, n beliebige der Markierungen in der Richtung enthält, wobei $n$ größer gleich 2 ist.

Hierbei, wie weiter unten genauer erklärt, bezeichnet $t_m$ die Länge einer der Markierungen, und $FOV_{\min}$ eine Länge des minimalen Sichtfelds der Kamera 110.

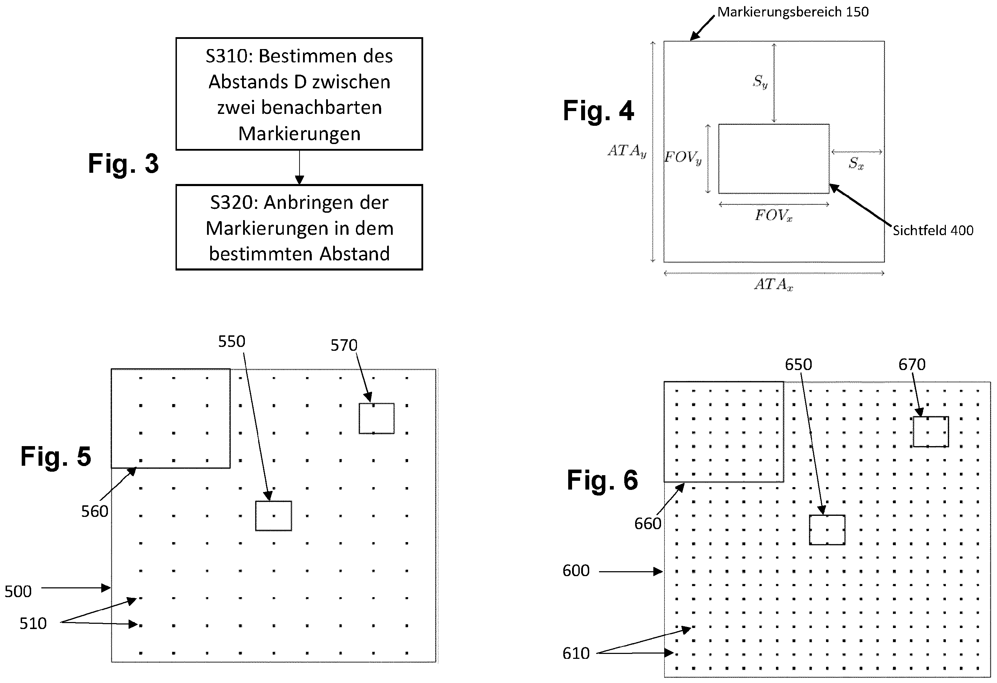

Dementsprechend wird, gemäß einem anderen Ausführungsbeispiel, ein Verfahren zum Anbringen von wechselseitig unterscheidbaren Markierungen an eine Parallelkinematik in einem Markierungsbereich zur Verfügung gestellt. Ein solches Verfahren ist in **Fig. 3** dargestellt und umfasst einen Schritt S310 des Bestimmens eines Abstands im Einklang mit entweder der Formel

$$\frac{FOV_{\min} - (n+2) * t_m}{n+1} < D \leq \frac{FOV_{\min} - (n+1) * t_m}{n};$$

oder der Formel

$$D \leq \frac{FOV_{\min} - (n+1) * t_m}{n}.$$

Das Verfahren umfasst ferner einen Schritt S320 des Anbringens jeweils in einer Richtung benachbarter Markierungen in dem bestimmten Abstand $D$ so dass sich die Pose der Parallelkinematik basierend auf einem mit einer Kamera aufgenommen Bild des Markierungsbereichs bestimmen lässt, falls sich mindestens eine vorgegebene Anzahl, $n$, der Markierungen auf dem Bild in der Richtung befindet. Anders gesagt, falls auf einem (beliebigen) aufgenommen Bild mindestens die vorgegebene Anzahl, $n$, der Markierungen in der Richtung enthalten sind, so lässt sich die Posen basierend auf dem Bild bestimmen. Im Allgemeinen können die Markierungen im Schritt des Anbringens S320 in unterschiedlichen Ebenen angebracht werden, insbesondere wenn $n$ größer gleich 2 ist und/oder die zweite der beiden obigen Formeln, also $D \leq \frac{FOV_{\min} - (n+1) * t_m}{n}$ verwendet wird.

Durch die direkte Lagebestimmung bzw. Posenbestimmung der beweglichen Arbeitsplattform mittels Markierungen ist es nicht mehr notwendig die Vorwärtskinematik aufwändig per numerischen Verfahren zu lösen (Entlastung des Controllers, höhere Bandbreite allerdings abhängig von der Framerate und der benötigten Identifizierungszeit). Ferner können Einflüsse wie Versatz, Verformung, Spiel und Gegenspiel (Backlash) in den Beinen, den Gelenken oder der beweglichen Plattform selbst detektiert werden. Eine absolute Lagebestimmung wird möglich, sodass auf Referenzfahrten verzichtet werden kann. Es ergibt sich ferner die Möglichkeit, direkt die Lage der beweglichen Arbeitsplattform zu regeln und nicht wie bisher nur die angetriebenen Gelenke (also z.B. nur die Längen der Beine bei einem Hexapoden). Des Weiteren wird hierfür nur ein Sensor (Kamera) für die Vermessung von 6 Freiheitsgraden verwendet, sodass auf komplizierte Ausrichtung mehreren Sensoren verzichtet werden kann. Insbesondere ist es möglich, dass nur ein Sensorbild, also ein Sensorsignal, verwendet wird, wodurch die Posenbestimmung weiter vereinfacht wird. Da in jeder Pose der Parallelkinematik mindestens eine Markierung (oder die nötige Mindestanzahl) sichtbar ist, kann mit einer solchen Direktmessung eine hohe Genauigkeit bei der Posenbestimmung im gesamten Arbeitsbereich des Roboters erreicht werden.

Es ist angemerkt, dass sich die folgende ausführliche Beschreibung in gleicher Weise auf die erfindungsgemäßen Parallelkinematiken als auch die erfindungsgemäßen Anbringungsverfahren bezieht.

### Kamera

Im Allgemeinen können erfindungsgemäße Parallelkinematiken eine Kamera umfassen. Die vorliegende Erfindung ist aber nicht hierauf beschränkt, da erfindungsgemäße Parallelkinematiken auch keine Kamera umfassen können. Eine Parallelkinematik kann etwa nur einen Anbringungsort, Anbringungsvorrichtung, und/oder Anbringungshalterung umfassen, an dem eine Kamera erfindungsgemäß angebracht werden kann (also z.B. so angebracht werden kann, dass die Kamera auf den Markierungsbereich gerichtet ist). Ebenso ist es möglich, dass eine Parallelkinematik lediglich dafür vorgesehen ist, zusammen mit einer an einer bestimmten Stelle stehenden Kamera (bestimmter Brennweite) verwendet zu werden, die auf den Markierungsbereich gerichtet ist.

Ferner ist darauf hingewiesen, dass der Begriff Kamera hier breit zu verstehen ist, und jegliche Geräte zu optischen Bildaufnahme umfasst, insbesondere sowohl Kameras mit und Kameras ohne Optik (z.B. ein *"Pinhole"*).

Ferner kann die Kamera ein geeignetes Objektiv (ggf. samt Zwischenring) umfassen, dass z.B. an der Kamera angeschraubt sein kann, um die Kamera auf die bewegliche Arbeitsplattform zu fokussieren. Der Begriff Kamera schließt auch ein solches eventuell austauschbares Objektiv mit ein. Wenn also in der vorliegenden Anmeldung z.B. von der *Brennweite der Kamera* gesprochen wird, kann dies die *Brennweite einer Optik* und/oder eines Objektivs mitumfassen oder sein. Gleiches gilt für die anderen hier verwendeten Kameraparameter.

Ferner kann die Kamera einen oder mehrere Zwischenringe beinhalten, mit denen der Abstand zur Fokus-Ebene verkürzt wird. Der verkürzte Arbeitsabstand g' kann über folgende Gleichungen berechnet werden:

$$g'_{fp} = \frac{1}{\frac{1}{f} - \frac{1}{b + zr}}$$

$$b = \cfrac{1}{\cfrac{1}{f} - \cfrac{1}{g_{fp}}}$$

wobei zr die Breite des Zwischenrings bezeichnet.

Die Kamera ist dazu eingerichtet, den Markierungsbereich bei unterschiedlichen, oder sogar bei sämtlichen möglichen Posen der Parallelkinematik zu *beobachten.* Die Kamera und der Markierungsbereich können, müssen aber nicht so angebracht sein/werden, dass der Markierungsbereich bei allen möglichen Posen beobachtbar ist. Z.B. kann es nicht beabsichtigt sein, bestimmte theoretisch anfahrbare Posen auch tatsächlich anzufahren und/oder diese mit Hilfe der Markierungen genau zu bestimmen. Insbesondere kann es sein, dass nur für Posen eines bestimmten Arbeitsbereichs die Posenbestimmung basierend auf den Markierungen und der Kamera durchgeführt werden soll. Es kann sich dabei z.B. um den Arbeitsbereich zur Durchführung einer bestimmten Arbeit/Aufgabe (oder eines bestimmten Teils einer Arbeit/-Aufgabe) handeln, für den eine besonders genaue Posenbestimmung nötig ist.

Hierbei ist mit *"beobachten"* gemeint, dass die Kamera auf den Markierungsbereich gerichtet ist oder gerichtet werden kann, also z.B. Bilder von diesem machen kann. Diese Bilder können, wie weiter unten erklärt, dazu verwendet um die Pose der Kinematik zu bestimmen. Es ist anzumerken, dass dies aber nicht bedeutet, dass die Kamera stets den gesamten Markierungsbereich im Blickfeld haben muss. Die Kamera kann z.B., wie weiter unten genauer erläutert, nur einen Ausschnitt des Markierungsbereichs im Blickfeld haben.

Die Kamera kann beispielsweise in oder an einer Basis der Parallelkinematik angebracht sein. Bei der Basis kann es sich z.B. um eine Grundplatte oder Plattform der Kinematik bzw. des Hexapoden handeln, in/an der die Kamera angebracht und/oder fixiert werden kann. Die Kamera kann dabei auf die Unterseite der Arbeitsplattform gerichtet sein, insbesondere wenn sich dort der Markierungsbereich befindet.

Dies ist auch in **Fig. 1** sowie in **Fig. 2a** und **Fig. 2b** veranschaulicht. Wie dort zu sehen, ist die Kamera 110 in die Grundplattform 120 eingebaut und auf die Unterseite der Manipulatorplattform 140 gerichtet, an der sich auch das AprilTag-Array 150 befindet. Es ist an dieser Stelle nochmal darauf hingewiesen, dass das Objektiv 130 auch als Teil der Kamera 110 angesehen werden kann.

Die Kamera kann dann derart ausgerichtet sein, dass sie in einer Nullstellung oder *"Home-Position"* des Hexapoden senkrecht zur beweglichen Plattform (bzw. dem Markierungsbereich) steht. Die Nullstellung kann dabei insbesondere eine Pose sein, bei der die bewegliche Arbeitsplattform parallel zur Grundplatte ist. Eine alternative Positionierung und/oder Ausrichtung der Kamera ist ebenfalls möglich, solange der Markierungsbereich auch bei unterschiedlichen Posen (oder sogar bei sämtlichen möglichen Posen) mit der Kamera beobachtbar ist.

Wie weiter unten bei der Beschreibung des Anbringungsorts des Markierungsbereichs erklärt, kann, wenn Position von Kamera und Markierungsbereich "vertauscht" sind, die Kamera auch an einer mitbewegten Stelle angebracht sein, z.B. am Endeffektor, insbesondere der Unterseite der Arbeitsplattform.

*Sichtfeld, minimales Sichtfeld $FOV_{min}$, und maximales Sichtfeld $FOV_{max}$*

Das *Sichtfeld* (die hier verwendete Abkürzung *"FOV"* ist vom englischen Begriff *"Field Of View"* abgeleitet) bezeichnet hier denjenigen Bereich, der von der Kamera erfasst wird. Es hat die gleiche Form wie der entsprechende Sensor der Kamera. Im Folgenden wird, zwecks Einfachheit und Klarheit der Beschreibung, nur der Fall eines rechteckigen und/oder quadratischen Sensors explizit beschrieben, die Erfindung ist aber nicht auf einen solchen beschränkt.

Im Fall eines rechteckigen Sensors, hat das Sichtfeld das gleiche Seitenverhältnis wie der Sensor, und es ergibt sich

$$FOV_x = \left(\frac{g}{f} - 1\right) * Sensor_x$$

und

$$FOV_y = \left(\frac{g}{f} - 1\right) * Sensor_y,$$

wobei *f* die Brennweite der Kamera bezeichnet, $FOV_x$ die Breite des Sichtfelds bezeichnet, $FOV_y$ die Höhe des Sichtfelds, $Sensor_x$ die Sensorbreite bezeichnet, und $Sensor_x$ die Sensorhöhe bezeichnet. Das Sichtfeld entspricht also dem Bereich bzw. Ausschnitt des Markierungsbereichs, den die Kamera bei einem bestimmten Abstand der Kamera vom Markierungsbereich beobachten kann. Ein größerer Sensor kann also bei gleichem Arbeitsabstand bzw. gleicher Gegenstandweite g ein größeres Sichtfeld *"einfangen"*. Anders gesagt werden also die Abmessungen des Sensors mit dem inversen Abbildungsmaßstab $1/\frac{b}{g} = \left(\frac{g}{f} - 1\right)$ skaliert, um das Sichtfeld zu erhalten (b bezeichnet, wie üblich, die Bildweite und es gilt $1/f = 1/b + 1/g$).

Um sicherzustellen, dass stets eine oder mehrere Markierungen im Sichtfeld sind, kann bei der weiter unten erklärten Bestimmung der Markierungsabstände das **minimale Sichtfeld** verwendet werden. Den obigen Formeln entsprechend ergibt sich für die minimale Länge $FOV_{min}$ des Sichtfelds

$$FOV_{x,\min} = \left(\frac{g_{\min}}{f} - 1\right) * Sensor_x$$

und

$$FOV_{y,\min} = \left(\frac{g_{\min}}{f} - 1\right) * Sensor_y.$$

Hierbei ist der auch als **Minimalabstand** bezeichnete Abstand $g_{min}$ der minimale, also kleinste, Abstand unter den Abständen, die der Markierungsbereich von der Kamera entfernt sein kann. Der Minimalabstand $g_{min}$ entspricht also der minimalen Gegenstandsweite des *mitbewegten* Markierungsbereichs, die durch Änderungen der Pose (anders gesagt, durch Bewegungen des Roboters) innerhalb eines bestimmten, gegebenenfalls anwendungsbedingt eingeschränkten Bereichs des Posenraums realisiert werden kann. Es muss sich also bei $g_{min}$ nicht um den tatsächlich kleinsten Minimalabstand handeln, wenn es z.B. nicht beabsichtigt ist, bestimmte theoretisch anfahrbare Posen auch tatsächlich anzufahren und/oder diese mit Hilfe der Markierungen genau zu bestimmen. Anders gesagt, kann es sich beim Minimalabstand um den kleinsten Abstand handeln für den die Posenbestimmung basierend auf den Markierungen und der Kamera durchgeführt werden soll. Es kann sich insbesondere um den minimalen Arbeitsabstand, also den minimalen Abstand zur Durchführung einer bestimmten Arbeit/Aufgabe, für die eine genaue Posenbestimmung nötig ist, handeln.

Die Längen $FOV_{x,\min}$ und $FOV_{y,\min}$ sind dementsprechend die Breite bzw. Höhe des Ausschnitts des Markierungsbereichs, der bei einem Minimalabstand der Kamera von dem Markierungsbereich in das Sichtfeld der Kamera fällt. Neben der Sensorbreite und -höhe wird das minimale Sichtfeld der Kamera also durch die Brennweite *f*, die z.B. durch das verwendete Objektiv gegeben ist, sowie den Minimalabstand des Markierungsbereichs von der Kamera definiert.

Insbesondere falls der Sensor quadratisch ist und/oder falls sich der Markierungsbereich durch Änderungen der Pose bzgl. des Sensors drehen kann, kann es des Weiteren sinnvoll sein nur mit einer Länge $FOV_{min}$ des minimalen Sichtfelds zu arbeiten. Anders gesagt, kann die Länge des minimalen Sichtfelds, also die Länge des Ausschnitts des Markierungsbereichs, der bei einem Minimalabstand der Kamera von dem Markierungsbereich in das Sichtfeld der Kamera fällt, auch durch folgender Formel bestimmt werden

$$FOV_{\min} = \left(\frac{g_{\min}}{f} - 1\right) l_{\text{Sensor}}, \text{ wobei}$$

für $l_{\text{Sensor}}$ die kleinere der beiden Längen $Sensor_x$ und $Sensor_x$ zu wählen ist. Anders gesagt, entspricht $FOV_{min}$ der kleineren (bzw. einer nicht größeren) der beiden Längen $FOV_{x,\min}$ und $FOV_{y,\min}$.

Im Folgenden wird der Einfachheit häufig der Fall nur einer minimalen Länge $FOV_{min}$, also z.B. der Fall eines quadratischen Sensors, betrachtet. Es ist aber darauf hingewiesen, dass das im Folgenden für $FOV_{min}$ gesagte im Allgemeinen auch für $FOV_{x,\min}$ und $FOV_{y,\min}$ gilt. Anders gesagt, kann es sich bei $FOV_{min}$ um $FOV_{x,\min}$, um $FOV_{y,\min}$, oder um die kleinere der beiden Längen handeln (außer es ist aus dem Kontext klar, dass dem nicht so ist). Das Gleiche gilt für $l_{\text{Sensor}}$ bzgl. $Sensor_x$ und $Sensor_y$.

Analog zum minimalen Sichtfeld können die Abmessungen des **maximalen Sichtfelds,** bei dem es sich um das Sichtfeld beim maximalen Arbeitsabstand $g_{max}$ handelt, bestimmt werden zu

$$FOV_{x,\max} = \left(\frac{g_{\max}}{f} - 1\right) * Sensor_x$$

und

$$FOV_{y,\max} = \left(\frac{g_{\max}}{f} - 1\right) * Sensor_y.$$

Der *maximalen Arbeitsabstand* $g_{max}$ ist hierbei ein maximaler Abstand unter den Abständen, die der Markierungsbereich von der Kamera durch Änderungen der Pose entfernt sein kann. Es handelt sich also, analog zum obigen Minimalabstand, um den maximalen Abstand des Markierungsbereichs von der Kamera bei Bewegungen des Roboters.

Ist der Sensor quadratisch und/oder kann sich der Markierungsbereich durch Änderungen der Pose bzgl. des Sensors drehen, kann

$$FOV_{\mathrm{max}} = \left( \frac{g_{\mathrm{max}}}{f} - 1 \right) L_{\mathrm{Sensor}}$$

verwendet werden, wobei für $L_{\mathrm{Sensor}}$ die größere der beiden Längen $Sensor_x$ und $Sensor_y$ zu wählen ist.

*Markierungsbereich*

Im Allgemeinen, kann der Markierungsbereich so angebracht sein, dass er sich mit der Pose der Kinematik mitbewegt. Der Markierungsbereich kann also z.B. an dem Endeffektor befestigt sein, dessen Position und Orientierung durch die Pose beschrieben wird. Im Fall eines Hexapoden kann sich der Markierungsbereich also insbesondere an der beweglichen Arbeitsplattform, z.B. im und/oder symmetrisch um das Zentrum der Arbeitsplattform befinden. Insbesondere falls die Kamera in einer Grundplatte des Hexapoden angebracht oder dort vorgesehen ist, kann der Markierungsbereich an der Unterseite der Arbeitsplattform der Parallelkinematik angebracht sein bzw. werden (Anbringungsverfahren).

Der Markierungsbereich kann z.B. zunächst auf einer separaten Zusatzplatte erstellt werden. Diese Zusatzplatte kann dann auf der Arbeitsplattform angebracht (z.B. angeschraubt) werden, so dass er von unten durch die Apertur sichtbar ist.

Es ist an dieser Stelle darauf hinzuweisen, dass in der vorliegenden Anmeldung als Anschauungsbeispiel meist nur der Fall einer festen Kamera und eines mitbewegten Markierungsbereichs explizit beschrieben wird. Allerdings ist die vorliegende Erfindung nicht auf einen mitbewegten Markierungsbereich beschränkt. Genauer gesagt, ist es möglich, die beschriebene Position (also den Anbringungsort) von Kamera und Markierungsbereich zu vertauschen. Für jedes hier explizit beschriebene Ausführungsbeispiel der vorliegenden Erfindung gibt es daher auch ein entsprechendes weiteres Ausführungsbeispiel, bei dem Position von Kamera und Markierungsbereich vertauscht sind und auf das sich die vorliegende Erfindung ebenso bezieht. Die Kamera wird dann mitbewegt und der Markierungsbereich ist ortsfest. Es also z.B. möglich, dass der Markierungsbereich in der Basis der Parallelkinematik angebracht ist (und sich also nicht bewegt) und die Kamera an der Unterseite der Arbeitsplattform des Hexapoden angebracht ist (und sich also mitbewegt).

Es ist ferner darauf hingewiesen, dass für den Markierungsbereich im Folgenden auch die Abkürzung *ATA* (aus dem englischen für AprilTagArray) verwendet wird, dies sich aber nicht notwendigerweise bereits auf eine bestimmte Anordnung der Markierungen und/oder die Verwendung von AprilTags beziehen muss. Durch die Verwendung eines Arrays aus Tags wird nur ein kleiner Bildbereich (Sichtfeld) für die Kamera benötigt. Dadurch kann die Kamera deutlich dichter an der Arbeitsplattform platziert werden, was die erreichbare Genauigkeit erhöht.

*Maße des Markierungsbereichs*

Die Größe des Markierungsbereichs kann so auf die Position und/oder das Sichtfeld der Kamera abgestimmt sein, dass die Kamera stets, also auch wenn sich der Roboter im vorgesehen Rahmen bewegt, einen Ausschnitt des Markierungsbereichs beobachtet.

Dies ist in **Fig. 4** für einen Sensor mit rechteckigen Abmessungen, also ein rechteckiges Sichtfeld 400 mit Breite und Höhe $FOV_x$ bzw. $FOV_y$, dargestellt. Wie zu sehen, sind die Abmessungen des Markierungsbereichs 150, also die Breite und Höhe, mit $ATA_x$ bzw. $ATA_y$ bezeichnet. Das dargestellte Sichtfeld 400 befindet sich zentriert im Markierungsbereich 150 und entspricht einer bestimmten Pose des Roboters, z.B. einer Ruhepose, Home-Pose, Home-Position, und/oder Referenzposition. Wie durch die Doppelpfeile veranschaulicht, kann sich der Markierungsbereich 150 bei Bewegungen des Roboters relativ zum Sichtfeld 400 bewegen. Hierbei bezeichnet $S_x$ die Stellweite in x-Richtung, also sowohl nach *"rechts"* als auch nach *"links"* ausgehend von einer zentrierten (Ruhe-)Position des Hexapoden, wie dargestellt. Ebenso bezeichnet $S_y$ die Stellweite in y-Richtung, also sowohl nach *"oben"* als auch nach *"unten"*. Anders gesagt ist der betrachtete Bewegungsspielraum des Hexapoden in horizontaler und vertikaler Richtung $2S_x$ bzw. $2S_y$. Damit sich das Sichtfeld bei solchen Bewegungen stets im Bereich des ATA befindet, können die Abmessungen des ATA entsprechend den Stellweiten des Hexapoden berechnet werden. Hierbei wird das Sichtfeld verwendet, welches sich bei maximaler Entfernung ($g_{min}$) zur Kamera ergibt (ausgelegt für das größere Sichtfeld, damit auch passend für kleineres Sichtfeld bei $g_{min}$). Es ergibt sich

$$ATA_x = FOV_{x,\max} + 2 * S_x$$

und

$$ATA_y = FOV_{y,\max} + 2 * S_y$$

für die horizontale bzw. die vertikale Länge des Markierungsbereichs.

Die Zusammenhänge zwischen minimalen Sichtfeld, maximalen Sichtfeld, Stellweiten und den Maßen des Markierungsbereichs werden nun nochmal anhand Fig. 5 und Fig. 6 veranschaulicht. Wie zu sehen, sind in **Fig. 5** und **Fig. 6** Markierungsbereiche 500 bzw. 600, die jeweils eine Mehrzahl an Markierungen 510 bzw. 610 beinhalten, dargestellt. Die Markierungsbereiche 500 und 600 unterscheiden sich dabei im Wesentlichen in der Dichte der Markierungen, bzw. den Abständen zwischen Markierungen, worauf weiter unten eingegangen wird.

Des Weiteren sind in Fig. 5 und Fig. 6 jeweils drei Bereiche markiert. Die Bereiche 550 und 650 stellen ein beispielhaftes Sichtfeld bei minimalen Abstand $g_{min}$ der Kamera vom Markierungsfeld gerichtet auf das Zentrum des Markierungsbereichs dar. Die Bereiche 550 und 650 sind also ohne Auslenkung in Richtung der Stellweiten von einer zentrierten Pose; der Hexapoden/Roboter befindet sich im Nullpunkt, z.B. seiner Ruhepose. Die Bereiche 560 und 660 stellen ein entsprechendes Sichtfeld bei maximalen Arbeitsabstand $g_{max}$ und maximalen Auslenkungen $S_x$ und $S_y$ (nach links oben) dar. Wie zu sehen, sind diese Sichtfelder größer als die anderen dargestellten Sichtfelder. Für die Bereiche 570 und 670 handelt es sich schließlich um das Sichtfeld bei minimalen Arbeitsabstand bei $g_{min}$. und maximalen Auslenkungen $S_x$ und $S_y$ (nach rechts oben).

*Anordnung der Markierungen im Markierungsbereich*

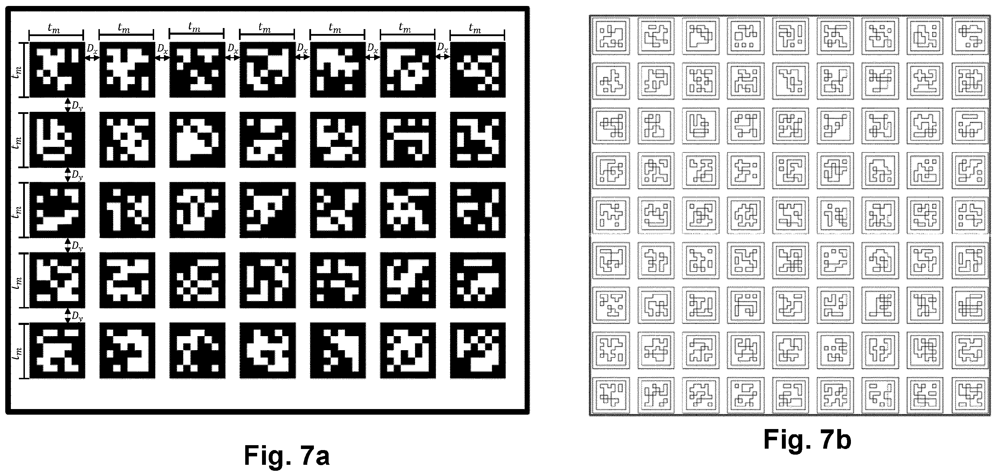

Im Allgemeinen beinhaltet der Markierungsbereich mehrere Markierungen. Insbesondere kann es sich beim Markierungsbereich um ein Array (ein Feld) aus *"Fiducial tags"*, z.B. AprilTags, handeln. Diese können gemäß einem regelmäßigen Anordnungsschema in dem Markierungsbereich angeordnet sein. Zum Beispiel können die Markierungen, wie in **Fig. 7a und 7b** veranschaulicht, entsprechend den Punkten eines zweidimensionalen Gitters, insbesondere in gleichmäßigen Abständen, angebracht werden bzw. worden sein. Der Markierungsbereich kann aber auch aus einem Raster von Markierungen bestehen, bei dem die Markierungen zum Beispiel auf konzentrischen Kreisen um einen Mittelpunkt angeordnet sind.

Wichtig kann hierbei sein, dass das Raster so aufgebaut und das Sichtfeld der Kamera (samt Objektiv) so eingestellt ist, dass immer mindestens eine Markierung bzw. eine bestimmte Anzahl an Markierungen vollständig sichtbar sind. Der Markierungsbereich sollte zudem so groß ausgeführt sein, dass auch in den Extrempositionen des Hexapoden mindestens eine Markierung bzw. die gewünschte Anzahl Markierungen vollständig sichtbar ist. Zur Posenbestimmung sollte zudem die genaue Position jeder der Markierungen auf dem Array bekannt sein.

*Markierungen*

Wie bereits angedeutet, umfasst die Parallelkinematik wechselseitig unterscheidbare Markierungen (auch als Tags bezeichnet), bzw. umfasst das Anbringungsverfahren einen Schritt des Anbringens der wechselseitig unterscheidbaren Markierungen in einem Markierungsbereich. Mit wechselseitig unterscheidbar ist hierbei gemeint, dass sich je zwei Markierungen unterscheiden lassen, es also möglich ist, eine Markierung basierend auf einem mit der Kamera aufgenommen Bild eindeutig zu identifizieren. Hierfür könnte auch die zuletzt bekannte Pose der Kinematik genutzt werden.

Die Differenzierbarkeit zwischen den einzelnen Tags (und deren bekannte Lage auf dem Array) ermöglicht es, aus einem einzelnen Tag auf die genaue Lage (Position und Orientierung) der beweglichen Plattform zu schließen.

Im Allgemeinen kann es sich bei den Markierungen um Referenzmarker, wie zum Beispiel ARToolKit-Markierungen, ArUco-Markierungen, QR-Codes oder insbesondere AprilTag-Markierungen handeln.

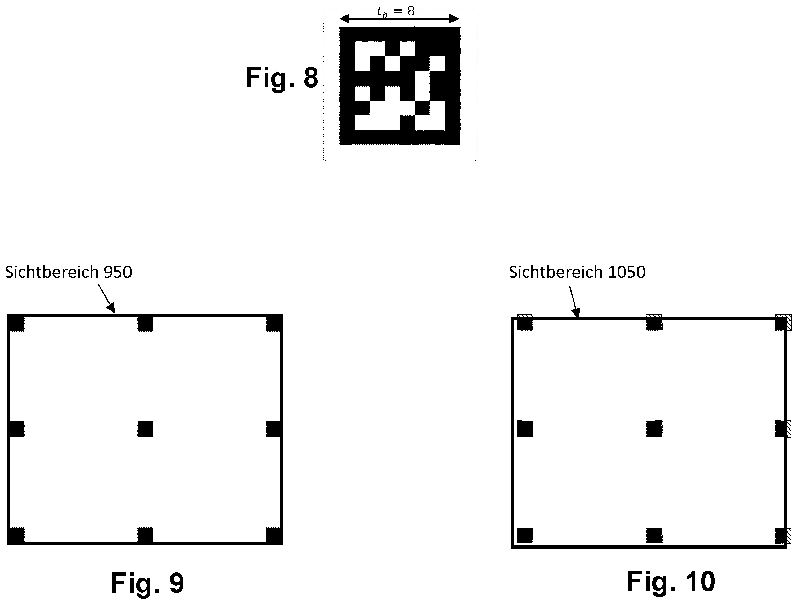

Insbesondere *AprilTags,* welche ein bestimmtes System von Referenzmarkern (im Englischen auch als *"Fiducial Tags"* bekannt) sind, haben sich insbesondere in der Robotik durchgesetzt. Sie können als eine spezielle Art von QR-Codes angesehen werden und haben, ähnlich wie QR-Codes, eine bestimmte Form und ein bestimmtes Layout zur Identifizierung, zur Fehlerkorrektur, zur Vermeidung von Fehlerkennungen oder zur Sicherstellung der Erkennung im Falle von Verdeckungen. Im Vergleich zu typischen QR-Codes enthalten AprilTags jedoch weniger Daten und sind speziell für eine robuste Identifizierung aus großer Entfernung sowie eine schnelle Dekodierung ihrer genauen Position und Ausrichtung in Bezug auf die Kamera konzipiert, was insbesondere für Echtzeit-Robotikanwendungen von Vorteil sein kann. Ein beispielhaftes AprilTag ist in **Fig. 8** dargestellt.

Allerdings ist die vorliegende Erfindung nicht auf eine spezielle Art von Markierungen und/oder Tags beschränkt. Im Allgemeinen lässt sich jede Art von optischen Markierungen verwenden, solange die Markierungen wechselseitig unterscheidbar sind und sich mit ihnen, wie weiter unten beschrieben, die Pose der Kinematik bestimmen lässt.

*Länge einer Markierung*

Die Länge einer der Markierungen ist in der vorliegenden Anmeldung mit $t_m$ bezeichnet. $t_m$ bezeichnet hierbei eine tatsächliche Länge, kann also z.B. in Metern oder Millimetern angegeben werden. Im Allgemeinen können alle Markierungen dieselbe Länge $t_m$ haben und quadratisch sein. Die vorliegende Erfindung ist aber nicht hierauf beschränkt. Die Markierungen können z.B. auch rechteckig sein und/oder nicht den ganzen Bereich eines Rechtecks tatsächlich nutzen, z.B., wenn sie rund sind.

Ferner bezeichnet $t_b$ die Anzahl an Informationseinheiten der Markierung in Richtung der Länge $t_m$. $t_b$ bezeichnet also z.B. die Anzahl der Bits, die nebeneinander in der Richtung kodiert sind, in der auch die Länge $\boldsymbol{t_m}$ gemessen wird. Während $\boldsymbol{t_b}$ also die Breite und/oder Höhe einer Markierung in z.B. Bits darstellt, stellt $\boldsymbol{t_m}$ die *"reale"* Breite und/oder Höhe der Markierung dar. Die Größe $t_b$ ist also, im Gegensatz zu $t_m$, einheitenlos bzw. dimensionslos. Auch hier ist wieder vereinfachend angenommen, dass die Markierungen quadratisch aufgebaut ist, also die Anzahl Bits $t_b$ in beide das jeweilige Quadrat definierenden Richtungen gleich ist.

Der Begriff Informationseinheiten bezieht sich hierbei auf einzelnen Bereiche, aus denen die Markierung aufgebaut sein kann und die jeweils Information kodieren können. Die Markierungen können z.B., wie in Fig. 8 dargestellt, aus mehreren Quadraten bestehen, wobei die Quadrate den Informationseinheiten entsprechen und in jedem Quadrat ein Bit kodierbar ist. Eine Informationseinheit kann also einem einzelnen Bit bzw. Quadrat eines AprilTags entsprechen. Die vorliegende Erfindung ist aber nicht hierauf beschränkt. Es ist z.B. möglich auch mehr als ein Bit an Information in einer Einheit zu kodieren, z.B. indem Farben und/oder unterschiedliche Höhen verwendet werden.

Damit die Markierungen gut erkannt werden können, kann die Länge $t_m$ einer Markierung gemäß folgender Gleichung bestimmt werden:

$$t_m \geq px * p * t_b * \left( \frac{g_{\max}}{f} - 1 \right)$$

Hierbei bezeichnet die **Pixellänge** *px* die Länge des Sensors, die einem Abtastwert der Kamera entspricht. *px* ist also die Pixelgröße der Kamera z.B. in Metern, Hat der Sensor z.B. in x-Richtung die Länge $Sensor_x$ und ist die Anzahl der Abtastwerte bzw. der Pixel in x-Richtung mit $N_{px}$ bezeichnet, so ergibt sich für die Pixellänge ($Sensor_x$ bezeichnet, wie oben erklärt, die Länge des Kamerasensors in x-Richtung):

$$px = Sensor_x / N_{px}$$

$N_{px}$ entspricht also der Bildauflösung in x-Richtung (also der Anzahl Pixel in x-Richtung) und ein kleinerer px-Wert entspricht also einer höheren Auflösung der Kamera. Für einen nichtquadratischen Sensor hätte man eine analog definierte Pixellänge *py* in y-Richtung und ebenso ein eigenes $t_m$ und $t_b$ für die y- Richtung. Es ist allerdings auch möglich, dass die Pixellängen in x- und y-Richtung (*px = py*) gleich sind, auch wenn die Sensorabmessung in x- und y-Richtung unterschiedlich sind ($Sensor_x \neq Sensor_y$). Im Folgenden wird vereinfachend davon ausgegangen, dass die Pixel der Kamera quadratisch sind, also zumindest *px = py* gilt.

Die Variable *p* entspricht hierbei der gewünschten Mindestanzahl der Abtastwerte pro Informationseinheit gemäß dem Nyquist-Shannon-Abtasttheorem und beträgt vorzugsweise 5. Im Allgemeinen kann *p* allerdings abhängig von der Kamera und/oder Anwendung unterschiedlich gewählt werden, ist aber in der Regel größer gleich 2 und kleiner gleich 5. Zum Beispiel kann für eine monochrome Kamera *p* = 2, und für eine RGB Kamera hingegen ein Wert *p* = 3 bis 4 besser geeignet sein.

Wird die minimale Größe eines AprilTags $t_m$ so bestimmt, so können die AprilTags bei beliebiger Entfernung, kleiner gleich dem maximalen Arbeitsabstand $g \leq g_{\max}$ noch ausreichend gut detektiert werden.

**Abstand D zwischen Markierungen**

Allgemein ist es möglich die Dichte der Tags, basierend auf der Vorgabe der **"gewünschten Anzahl"** an Tags, die stets mindestens zu sehen sein sollen, sowie den gegebenen Systemparametern, insbesondere der Brennweite, zu bestimmen (z.B. zu berechnen). Eine solche *"gewünschte"* oder vorgegebene Anzahl wird in der vorliegenden Anmeldung mit *"n"* bezeichnet (oder mit $n_x$ und $n_y$ falls zwischen x- und y-Richtung explizit unterschieden wird) und kann im Allgemeinen eine beliebige ganze Zahl größer gleich 1 sein (z.B. *n* = 1, *n* = 2, etc.). $n_x$ und $n_y$ können im Allgemeinen gleich oder unterschiedlich sein. Die gewünschte Mindestanzahl Tags *auf dem Bild* ist somit *n * n* oder, falls zwischen x- und y- Richtung unterschieden wird, $n_x * n_y$.

Es kann z.B. ausreichend sein, dass $n$ der Markierungen auf einem Bild des Markierungsbereichs in einer Richtung (z.B. x- oder y- Richtung) zu sehen sind, um die Pose der Kinematik basierend auf diesem Bild zu bestimmen. Insbesondere kann die Anzahl $n$ an Markierungen der Anzahl an Markierungen entsprechen, die auf einem Bild des Markierungsbereichs in einer Richtung (z.B. x- oder y- Richtung) mindestens zu sehen sein müssen, um die Pose der Kinematik zu bestimmen. Anders gesagt, kann $n$ die Mindestanzahl an Markierungen sein, die nötig (und ausreichend) ist, damit die Pose stets basierend auf einem Bild bestimmt werden kann, auf dem sich n Markierungen in der betrachteten Richtung befinden. *"stets"* ist hierbei so zu verstehen, dass natürlich auch in der jeweiligen anderen Richtung ausreichend viele Markierungen zu sehen sein müssen (was eine andere Anzahl an Markierungen sein kann, als die Anzahl in der betrachteten Richtung).

Zum Beispiel können $n_x$ und $n_y$ die Mindestanzahlen an Markierungen sein, die auf einem Bild in x- bzw. y- Richtung mindestens zu sehen müssen, damit sich die Pose basierend auf diesem Bild bestimmen lässt. Die Pose lässt sich dann stets bestimmen, falls sich sowohl (i) $n_x$ Markierungen in x-Richtung, als auch (ii) $n_y$ Markierungen in y-Richtung auf dem Bild befinden. Das Wort *"ausreichend"* bezieht sich also in diesem Zusammenhang auf die jeweils betrachtete Richtung, und heißt nicht, dass es nicht auch nötig sein kann, dass eine bestimmte Anzahl an Markierungen in der anderen Richtung zu sehen ist. Ebenso bedeutet die Aussage, dass sich die Pose stets bestimmen lässt, falls $n_x$ Markierungen in x- Richtung zu sehen sind, dass dies möglich ist, falls nicht auch $n_y$ Markierungen in y-Richtung zu sehen sind.

Es kann also sein, dass, falls weniger als *n Markierungen* auf einem Bild sind, die Pose nicht mehr (zumindest nicht für ein bei beliebiger Pose aufgenommenes Bild) eindeutig bestimmt werden kann. Die vorliegende Anmeldung ist aber nicht auf ein solches "minimales" $n$ beschränkt. Die Anzahl $n$ kann z.B. auch größer sein als theoretisch nötig ist, um die Pose der Kinematik zu bestimmen, etwa um die Zuverlässigkeit/Robustheit der Erkennung zu verbessern. Die Anzahl n kann z.B. durch die Wahl der verwendeten Markierungen vorgegeben sein bzw. basierend auf der Wahl der Markierungen bestimmt werden.

Zum Beispiel lassen sich die Abstände, $D_x$ und $D_y$, zwischen benachbarten Tags in x- und y-Richtung basierend auf einer Vorgabe der gewünschten Anzahl an Tags, die stets mindestens in x- bzw. y-Richtung vollständig zu sehen sein sollen, berechnen. Die Markierungen können z.B., wie in Fig. 7a angedeutet, in regelmäßigen Abständen $D_x$ und $D_y$ in x- bzw. y-Richtung angeordnet sein. Der Begriff **benachbart** bezieht dann also auf die nächstliegende Markierung in x- bzw. y- Richtung.

Durch die Sichtbarkeit mindestens der gewünschten Anzahl an Markierungen (z.B. einer) kann die Lage der beweglichen Plattform des Hexapoden für jede anzufahrende Pose detektiert werden. Gleichzeitig erlauben die hier beschriebenen großen Abstände z.B. weniger verschiedene Markierungen zu verwenden und/oder die Anzahl an Markierungen, die sich auf einem einzelnen mit der Kamera aufgenommenen Bild befinden, zu reduzieren. Hierdurch kann die Erkennung/Identifizierung der Markierung auf einem Bild sowie die Bestimmung der Pose vereinfacht und beschleunigt werden.

Es ist zunächst noch darauf hingewiesen, dass, auch wenn im Folgenden nicht von jedem der Abstände $D^{max}$, $D_x$ und $D_y$ explizit gesprochen wird, dass Gesagte in gleicher, also analoger Weise, für die Abstände $D^{max}$, $D_x$ und $D_y$ zwischen Markierungen gilt. Zwischen $D_x$ und $D_y$ kann z.B. unterschieden werden, falls sich weder der Markierungsbereich bezüglich der Kamera dreht noch die Sensorabmessungen quadratisch sind. Für einen quadratischen Sensor wäre $D_x = D_y = D$, und falls relative Drehungen möglich sind, wäre der kleinere der beiden Abstände $D_x$ und $D_y$ zu verwenden (und, wie weiter unten genauer erklärt, durch $\sqrt{2}$ zu teilen).

Zum Beispiel lässt sich die gewünschte Anzahl $n_x$ an Tags pro Reihe (horizontal angeordneter Tags, *"x-Richtung"*) und die gewünschte Anzahl $n_y$ an Tags pro Spalte (vertikal angeordnete Tags, *"y-Richtung"*) vorgeben. Um sicherzustellen, dass sich stets die gewünschte Menge an Tags ($n_x$ und $n_y$) im Sichtfeld der Kamera befindet, kann darauf basierend der Abstand $D_x$ zwischen den Tags in x-Richtung und der Abstand $D_y$ zwischen den Tags in y-Richtung berechnet werden gemäß:

$$D_x \leq D_x^{max} = \frac{FOV_X - (n_x + 1) * t_m}{n_x}$$

$$D_y \leq D_y^{max} = \frac{FOV_y - (n_y + 1) * t_m}{n_y}$$

Es werden sich demnach $n_x * n_y$ AprilTags im Sichtbereich befinden. Da sich das Sichtfeld bei zunehmenden Arbeitsabstand vergrößert, kann für die Berechnung das Sichtfeld bei $g_{min}$ verwendet werden. Genauer gesagt wird also $FOV_{x,min}$ und $FOV_{y,min}$ für $FOV_X$ bzw. $FOV_y$ eingesetzt. Es ist angemerkt, dass $FOV_{x,min} \geq (n_x + 1) * t_m$ und $FOV_{y,min} \geq (n_y + 1) * t_m$ gelten sollte, damit sich nicht-negative Abstände $D_x^{max}$ bzw. $D_y^{max}$ ergeben.

Durch die obigen Höchstabstände kann die gewünschte Mindestanzahl über den gesamten Arbeitsbereich sichergestellt werden. Gleichzeitig werden relativ große Abstände ermöglicht, was die Identifizierung der einzelnen Markierungen erleichtert und Rechenzeit spart.

Insbesondere wenn es ausreicht, dass stets nur eine Markierung vollständig zu sehen ist, kann der Abstand $D$ ($D$ kann steht hier insbesondere für $D_x$ und/oder $D_y$) zwischen je zwei benachbarten Markierungen im Bereich

$$(FOV_{\min} - 3t_m)/2 < D \leq FOV_{\min} - 2t_m$$

gewählt werden. Dies erlaubt die Verwendung eines großen Tag-Abstands, wobei jedoch immer noch mindestens ein Tag ausreichend zu sehen ist.

$$Grenzfall - Vergr\ddot{o}\ss erung\ von\ D^{max}\ (D_x^{max}, D_y^{max})$$

Wenn die Abstände $D_x$ und $D_y$ wie oben beschrieben bestimmt werden, gibt es den Grenzfall, dass mehr als $n_x * n_y$ Tags vollständig sichtbar sind, genauer gesagt kann es möglich sein, dass bis zu $(n_x + 1) * (n_y + 1)$ Markierungen vollständig zu sehen sind. Dies ist in **Fig. 9** für den Fall $n_x = n_y = 2$ veranschaulicht. Wie zu sehen, sind neun Tags vollständig sichtbar, befinden sich also vollständig im Sichtbereich 950. Der **Grenzfall** bezieht sich hierbei auf den Übergang von Spalten bzw. Reihen von Tags aus dem Sichtfeld (also wenn sich z.B. eine neue Reihe gerade auf der einen Seite reingeschoben hat, die Reihe auf der anderen Seite aber gerade noch nicht begonnen hat, sich wieder rauszuschieben).

Wie in **Fig. 10** veranschaulicht, ist dies bei minimaler Verschiebung aber schon nicht mehr der Fall, d.h. bei einer kleinen Verschiebung (in x- und y-Richtung) sind wieder nur $n_x*n_y$ Tags, also im betrachteten Beispiel nur noch vier Tags, vollständig sichtbar, befinden sich also vollständig im Sichtbereich 1050.

Da die Kamera in der Regel eine endliche Auflösung hat, kann dieser Grenzfall ausgenutzt werden, um die maximalem Abstände $D_x^{max}$ und $D_y^{max}$, und somit auch $D_x$ und $D_y$ jeweils um eine Pixelgröße $px$ zu erhöhen. Es ergibt sich somit

$$D_X \leq D_x^{max} = \frac{FOV_{X,min} - (n_x + 1) * t_m}{n_x} + px\left(\frac{g_{\min}}{f} - 1\right)$$

$$D_y \leq D_y^{max} = \frac{FOV_{y,min} - (n_y + 1) * t_m}{n_y} + py\left(\frac{g_{\min}}{f} - 1\right)$$

Der Abstand zwischen den Markierungen wird also um den kleinstmöglichen auflösbaren Abstand, nämlich $px$ bzw. $py$ verschoben. Dadurch sind rein geometrisch immer $n_x * n_y$ Tags (vollständig) im Sichtfeld, da sich die anderen nicht vollständig im Sichtfeld befinden.

Eine bessere Kamera (mit einer kleineren Pixelgröße $px$ bzw. $py$) steht hier einer möglichen Vergrößerung der Abstände zwischen den Apriltags $D_x$ bzw. und $D_y$ entgegen. Das Hinzufügen des $px$- bzw. des $py$-Terms in den obigen Formeln hat zu Folge, dass die im Grenzfall mehreren sichtbaren Tags um genau einen Pixel auseinander verschoben werden, sodass genau eine pixelbreite Reihe eines der beiden Rand-Tags fehlt und dieser nicht mehr vollständig sichtbar ist. Je besser die Kamera ist, desto kleiner ist ein aufgelöster Pixel und desto dichter sollten die Tags also aneinander liegen, wenn nur ein Pixel eines Rand-Tags im Grenzfall fehlen soll. Das bedeutet, dass es eines dichteren Arrays bedarf, um die höhere auflösbare Genauigkeit einer besseren Kamera vollständig zu nutzen. Es ist hierzu anzumerken, dass sich das eben Gesagte auf eine (vor)gegebene Markierungslänge $t_m$ gilt. Wird diese nämlich an die bessere Auflösung angepasst (kleineres $px$ bzw. $py$), so können bei Verwendung einer besseren Kamera auch kleinere Tags verwendet werden, also gemäß obiger Formel $t_m = px * p * t_b * \left(\frac{g_{\max}}{f} - 1\right)$, wobei nun die kleinere Pixellänge $px$ bzw. $py$ der besseren Kamera verwendet wird. Insbesondere ist durch Einsetzen des px-abhängigen Ausdrucks für $t_m$ in die obigen Formel für die Abstände $D_x$ bzw. $D_y$ zu sehen, dass sich die Abstände durch eine kleinere Pixelgröße in der Regel vergrößern lassen, wenn die Markierungslänge $t_m$ entsprechend an die bessere Kamera angepasst wird.

Es ist auf der anderen Seite auch möglich diese bessere Auflösung der Kamera zu nutzen, um die Abstände zwischen den Markierungen zu vergrößern. Im Allgemeinen hat eine Informationseinheit die Länge $t_m/t_b$, und ein Abtastwert entspricht beim Abstand $g$ der Markierung von der Kamera der Länge $px * \left(\frac{g}{f} - 1\right)$. Es werden also beim Arbeitsabstand $g$

$$P(g) = \frac{t_m}{t_b * px}\left(\frac{f}{g-f}\right)$$

Abtastwerte mit der Kamera von einer Informationseinheit gemacht. Wie zu sehen, führt die Verwendung einer Kamera mit kleinerem $px$ zu einer Vergrößerung der Anzahl an gemachten Abtastwerte $P$. Im Allgemeinen, wenn die Mindestanzahl gemachter Abtastwerte $P(g_{max})$ größer als die vorgegebene Mindestanzahl $p$ ist, können die Markierungen kleiner gemacht werden, wodurch $P$ kleiner wird, und/oder die Abstände zwischen den Markierungen können größer gemacht werden. Insbesondere, wenn die Abstände vergrößert werden sollen, kann auf $(P\text{-}p)$ Abtastwerte an jeder der beiden Informationseinheiten am Rand verzichtet werden. Der Abstand zwischen den Markierungen kann somit z.B. auf

$$D_X \leq D_x^{max} = \frac{FOV_{X,min} - (n_x+1)*t_m}{n_x} + (2P(g) - 2p + 1)*px*\left(\frac{g_{min}}{f} - 1\right)$$

erhöht werden. Für $P(g)$ kann konservativ, z.B. $P(g_{max})$ verwendet werden. Da aber die $n_x$ Markierungen in der Regel beim minimalen Arbeitsabstand nicht alle vollständig zu sehen sein werden, kann hier auch $P(g_{min})$ verwendet werden.

Vergrößert man den Abstand bzw. den maximalen Abstand weiter auf

$$D_X = D_x^{max} = \frac{FOV_x - (1-n_x)*t_m}{n_x}$$

so sind im Grenzfall $(n_x$ - 1) * $(n_y$ - 1) vollständig zu sehen. Die eine Markierungsreihe hat sich also bereits aus dem Sichtfeld geschoben, während sich die nächste noch nicht begonnen hat ins Sichtfeld zu schieben. Es sind also jetzt im Grenzfall weniger und nicht mehr Markierungen zu sehen; für $n_x = n_y = 2$ wäre also bei einem solchen vergrößerten Abstand im Grenzfall nur ein Tag zu sehen.

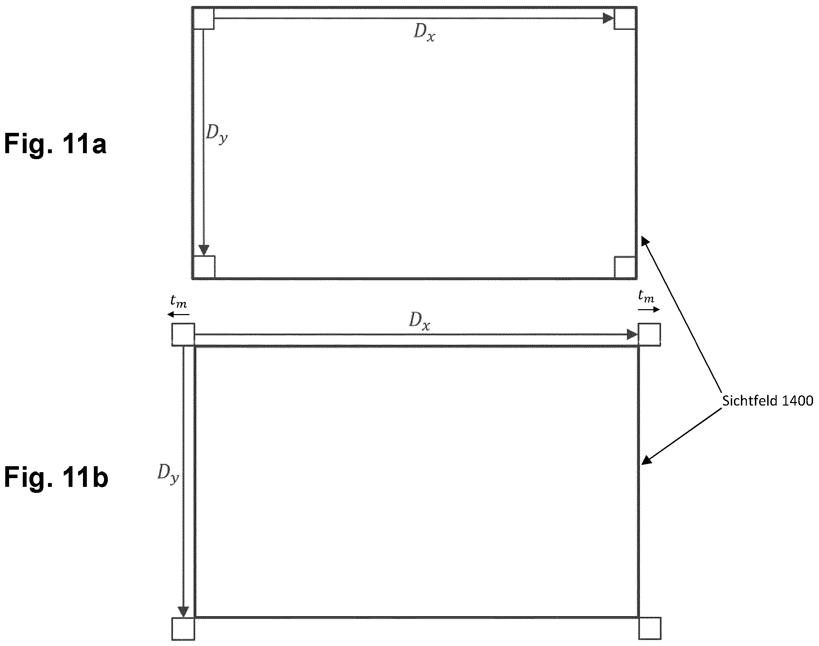

Im Allgemeinen kann es auch sein, dass es nicht nötig ist, einen Tag vollständig zu sehen, um ihn zu identifizieren und/oder seine Position zu bestimmen. Der Abstand $D_x^{max}$ bewegt sich dabei, wie in **Fig. 11a und 11b** veranschaulicht, im Bereich (zwischen den Grenzen)

$$\frac{FOV_X - (n_x+1)*t_m}{n_x} \leq D_x^{max} < \frac{FOV_x - (1-n_x)*t_m}{n_x}$$

Genauer gesagt, ist $D_X$ in Fig. 11a gleich der unteren Grenze in obiger Formel gesetzt (entsprechend der linken Seite), und in Fig. 11a gleich der oberen Grenze gesetzt (entsprechend der rechten Seite). Das Sichtfeld 1400 in Fig. 11a und b hat dabei die selbe Größe und nur der Abstand zwischen den Markierungen wurde geändert. Wie in Fig. 11b angedeutet hat der Bereich, in dem sich $D_X = D_x^{max}$ bzw. $D_y = D_y^{max}$ dabei verändert, eine Länge von $2t_m$. Die Grenzen des Bereichs stellen dabei die Extremfälle dar, in denen entweder $(n_x + 1)$ Tags zu sehen sind (untere Grenze, entsprechend dem linken Ausdruck obiger Gleichung), oder $(n_x$ - 1) Tags zu sehen ist (obere Grenze, entsprechend dem rechten Ausdruck obiger Gleichung). Insbesondere würde bei der Wahl von $n_x = n_y = 1$ bei der oberen Grenze kein Tag vollständig zu sehen sein.

Allgemein sind bei der unteren Grenze stets mindestens $n_x \cdot n_y$ Tags vollständig zu sehen und im Grenzfall mehr Tags vollständig sichtbar, nämlich bis zu $(n_x + 1) \cdot (n_y + 1)$. Bei der oberen Grenze sind höchstens $n_x \cdot n_y$ Tags vollständig zu sehen. D.h. im Grenzfall sind weniger Tags vollständig zu sehen, nämlich bis zu $(n_x$ - 1) $\cdot (n_y$ - 1).

Wird z.B. $n_x = n_y = 3$ gewählt, und der der unteren Grenze entsprechende Abstand verwendet, so sind immer mindestens $n_x \cdot n_y = 3 \cdot 3 = 9$ Tags im vollständig Sichtfeld zu sehen. Im Grenzfall, also bei bestimmten Posen, sind mehr als 9 Tags vollständig zu sehen (bis zu 16). Wird bei derselben Wahl von $n_x, n_y$ der der oberen Grenze entsprechende Abstand verwendet, so sind höchstens 9 Tags vollständig im Sichtfeld, im Grenzfall aber weniger als 9 Tags (bis zu 4).

Falls es nicht nötig ist, eine Markierung vollständig zu sehen, um sie zu identifizieren und/oder ihre Position zu bestimmen, kann daher der Abstand $D_x^{max}$ um bis zu fast $2t_m$ vergrößert werden. Anders gesagt, kann, falls es z.B. ausreicht nur den Bruchteil $0 < R \leq 1$ eines Tags zu sehen, der Abstand zwischen den Tags gemäß

$$D_X = D_x^{max} = \frac{FOV_X - (n_x + 1) * t_m}{n_x} + 2t_m(1 - R)$$

bestimmt werden.

*Berücksichtigung von Rotationen*

Wenn sich der Markierungsbereich bezüglich des Sensors drehen kann, wird die kleinere der beiden Sichtfeldlängen $FOV_x$ und $FOV_y$ verwendet. Ferner sollte nicht mehr zwischen $D_X$ und $D_y$ unterschieden werden. Es wird also derselbe Abstand $D = D_X = D_y$ für die horizontale und die vertikale Richtung verwendet. Der Abstand kann dabei gemäß einer beliebigen der obigen Formel bestimmt werden, er wird jedoch dann, um Rotationen zu berücksichtigen, durch $\sqrt{2}$ geteilt, also verkleinert. Insgesamt ergibt sich somit

$$D \leq \min\{ D_x^{max}/\sqrt{2}, D_y^{max}/\sqrt{2}\}$$

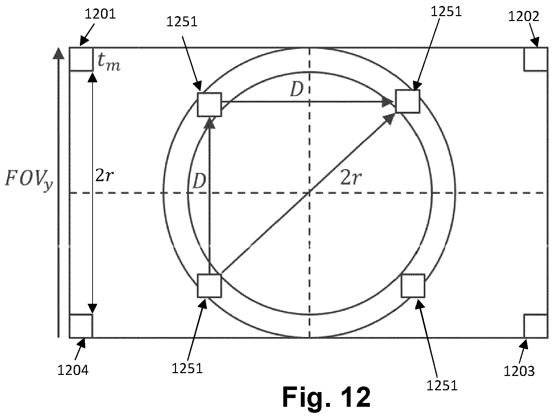

Dies wird nun mit Bezug zu **Fig. 12** genauer erklärt. In Fig. 12 stellen die Quadrate 1201, 1202, 1203 und 1204 AprilTags ohne Berücksichtigung der Rotation dar. Wie zu sehen, sind die Abstände in x- und y-Richtung zwischen benachbarten Tags noch unterschiedlich groß. Der Abstand in y-Richtung ist in diesem Beispiel der kleinere Abstand.
Unter Berücksichtigung von Rotationen um den Mittelpunkt des FOV werden die Abstände nun so angepasst, dass sich die AprilTags alle auf einem Radius innerhalb des Sichtfeldes befinden. Dies ergibt die Quadrate 1251, 1252, 1253 und 1254, die AprilTags mit angepasstem Abstand veranschaulichen. Wie angedeutet, ist der Abstand $D$ hierbei so gewählt, dass der resultierende Durchmesser $2r$ dem Abstand in y-Richtung entspricht, also kleiner gleich $D_y^{max}$ ist, also z.B.

$$2r = D_y^{min} = \frac{FOV_y - (n_y + 1) * t_m}{n_y} = \sqrt{2}D$$

gilt. Für den Abstand ergibt sich somit

$$D = \frac{FOV_y - (n_y + 1) * t_m}{\sqrt{2}\, n_y}$$

Für $n_y = 1$ bedeutet dies explizit:

$$D = \frac{FOV_y - 2t_m}{\sqrt{2}}$$

**3D-ATA**

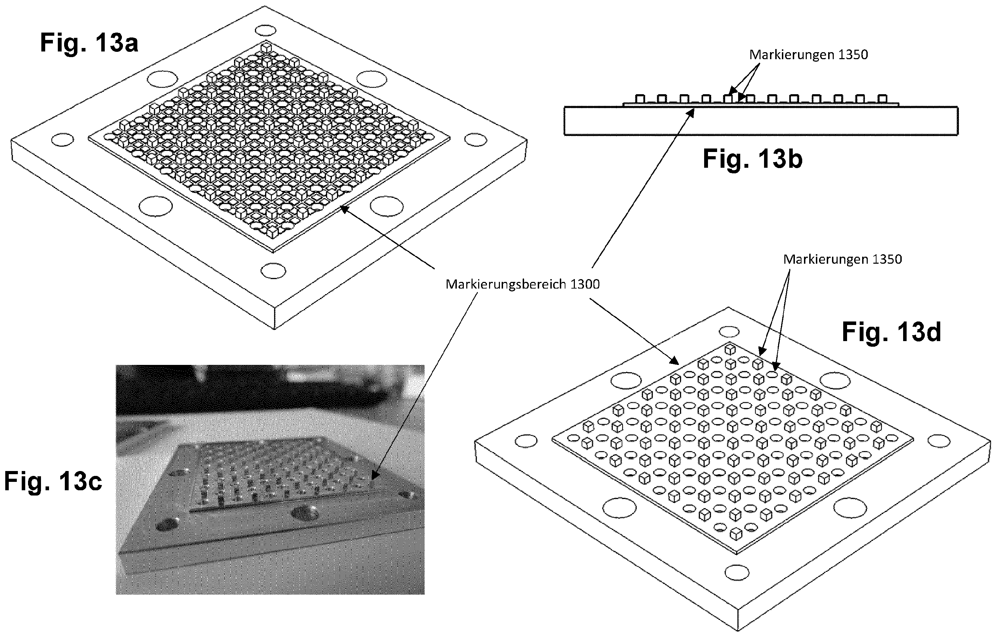

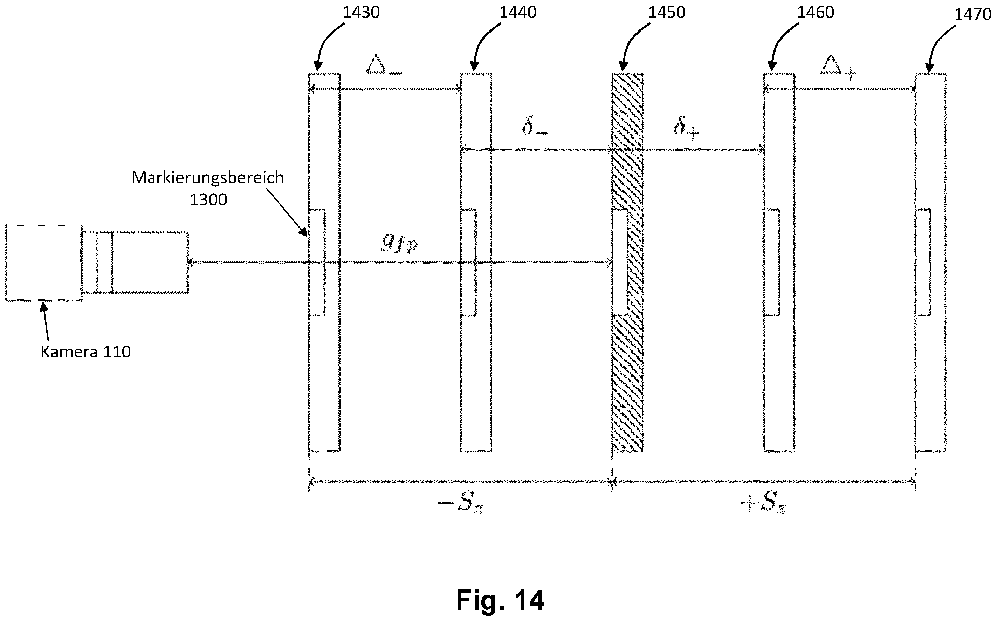

In einigen Ausführungsformen sind die Markierungen in unterschiedlichen Ebenen im Markierungsbereich angebracht. Insbesondere sind zwei benachbarte Markierungen in unterschiedlichen Ebenen angebracht. Es müssen aber nicht alle benachbarten Markierungen in unterschiedlichen Ebenen liegen. Dies ist in **Fig. 13a, 13b, 13c und 13d** veranschaulicht. Wie zu sehen, sind die Markierungen 1350 in den jeweiligen Markierungsbereichen 1300 in unterschiedlichen Ebenen angebracht.
Der Begriff unterschiedliche Ebenen bezieht sich also darauf, dass sich die xy-Ebenen der einzelnen Markierungen in unterschiedlicher Höhe bzw. Tiefe befinden. Die Markierungen sind also in *"z-Richtung"* versetzt, wobei die z-Richtung hierbei orthogonal zur bisher beschriebenen xy-Ebene ist. Anders gesagt, befinden sich die unterschiedlichen Ebenen bei einer gegebenen Pose in verschiedenen Arbeitsabständen, insbesondere in unterschiedlichen Abständen zur Kamera. Die Markierungen verschiedener Ebenen haben bei gegebener Pose somit unterschiedliche Gegenstandweiten.
Die Verwendung eines 3-dimensionalen Markierungsbereichs ("3D-ATA") ermöglichen es den Arbeitsbereich, in dem mit der Kamera Markierungen noch ausreichend gut erkannt werden können, zu vergrößern. So kann eine Schärfentiefe (auch Tiefenschärfe genannt) über den gesamten angestrebten Arbeitsbereich des parallelen Mechanismus erreicht werden. Wie in **Fig. 14,** veranschaulicht entspricht dies der Stellweite $\pm S_z$ in z-Richtung. Bei einem gegebenen Kameraaufbau mit bestimmter Brennweite und zzgl. eventueller Zwischenringen ergibt sich ein Arbeitsabstand $g_{fp}$ zur vorderen Linse des Objektivs, bei dem die Ebene scharf fokussiert wird (Fokus Ebene 1450 (engl. focal plane)). Ausgehend von diesem Abstand wird das ATA in kleinen Schrittweiten um $\pm S_z$ verschoben und die Anzahl an detektierten Tags erfasst. Werden z.B. bei einer Stellweite von $\pm 5{,}5$ mm noch ausreichend Tags erkannt, die gewünschten Stellweite ist aber $\pm 6{,}5$ *mm,* so "fehlen" noch jeweils 1 *mm* um den gewünschten Arbeitsbereich des Hexapoden abzudecken. Dies kann erreicht werden, indem die Tags nicht auf einer Ebene auf dem ATA angebracht werden, sondern auf mehreren Ebenen.

In Fig. 14 stellen die Manipulatorplattformen 1440 bzw. 1460 (z.B. die bewegliche Plattform des Hexapoden, hier stellvertretend für den Markierungsbereich 1300) verschoben um eine Länge $\pm \delta$ ausgehend von der Fokus Ebene 1450, die sich im Abstand $g_{fp}$ zur Kamera befindet, dar. Dies sind hier die gemessenen Abstände, in denen noch ausreichend AprilTags erkannt werden. Die Manipulatorplattformen 1430 bzw. 1470 stellen die Verschiebungen der Manipulatorplattform entsprechend der maximalen gewünschten Verschiebung der Manipulatorplattform in z-Richtung dar, entsprechen also den Stellweiten $\pm S_z$ des Hexapoden. Diese gilt es zu erreichen. Um den gesamten gewünschten Arbeitsbereich abzudecken (also ein scharfes Bild einer Markierung machen zu können), werden die Differenzen $\pm \Delta$ überwunden, indem Tags auf eine um $\Delta_+$ erhöhte Ebene aufgebracht werden, bzw. auf eine um $\Delta_-$ vertiefte Ebene aufgebracht werden. Die Abstände berechnen sich dabei wie folgt:

Erhöhung um $\Delta_+ = S_z - \delta_+$
Vertiefung um $\Delta_- = S_z - \delta_-$

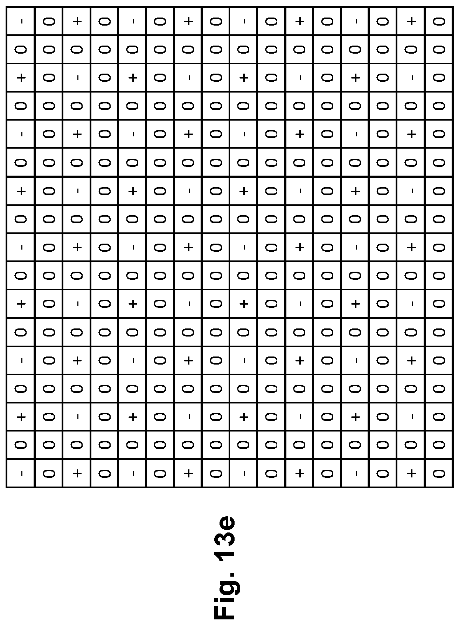

Im Allgemeinen kann hierbei, wie in Fig. 14 dargestellt, auch $\delta_+ = \delta_- = \delta$ bzw. $\Delta = \Delta_+ = \Delta_-$ gelten; die erhöhte Ebene ist dann um $\Delta = S_z - \delta$ gegenüber der Fokusebene erhöht und die vertiefte Ebene um (die gleiche Länge) $\Delta = S_z - \delta$ vertieft. Es können auch mehr als zwei Ebenen erstellt werden. Allgemein können z.B. 2k Ebenen verwendet werden, wobei die Markierungen in Ebenen angebracht sind, die um $\pm \Delta_i = \frac{\Delta}{k} * i$ mit $i = \{1, ..., k\}$, erhöht bzw. vertieft in z-Richtung bezüglich der Fokus Ebene 1450 sind. Werden auch Markierungen in der Nullebene angebracht (also in der Fokusebene 1450, hier gilt $\Delta_0 = 0$), ergeben sich entsprechend 2k + 1 Ebenen. In x- bzw. y-Richtung können die Markierungen dabei z.B. einem regelmäßigen Muster folgend periodisch den verschiedenen Ebenen zugeordnet werden. Insbesondere können die Markierungen so den unterschiedlichen Ebenen zugeordnet sein, dass zwei beliebige benachbarte Markierungen in verschiedenen Ebenen liegen. Dies muss aber nicht so sein und ein Muster, in dem einige benachbarte Markierungen in derselben Ebene liegen ist auch denkbar (vgl. Fig. 13e).

Es ist noch darauf hingewiesen, dass in den 3D-ATA-Ausführungsformen, die Markierungen so (dicht) angeordnet sind, bzw. der Abstand D so bestimmt wird (Anbringungsverfahren), dass stets zwei oder mehr Markierungen im Sichtfeld der Kamera sind. Es wird also $n_x$ und/oder $n_y$ größer 1 gewählt und der Abstand D zwischen je zwei benachbarten Markierungen genügt somit folgender Formel:

$$2D \leq FOV_{\min} - 3t_m$$

$n_x$ und $n_y$ werden dabei im Einklang mit der Zuordnung der Markierungen zu den Ebenen, insbesondere der Anzahl der Ebenen gewählt. Insbesondere werden $n_x$ und $n_y$ basierend auf Zuordnung der Markierungen zu den Ebenen so gewählt, dass stets Markierungen unterschiedlicher Ebenen im Sichtfeld sind. Insbesondere kann hierbei die Anzahl der Markierungen, die stets zu sehen sind, größer gleich der Anzahl verschiedener Ebenen gewählt sein und die Markierungen so den Ebenen zugeordnet sein, dass stets eine Markierung jeder Ebene zu sehen ist. Es ist dann stets eine Markierung zu sehen, die auch ausreichend scharf fokussiert werden kann. Die Tagabstände $D_x$, $D_y$ können also so sein, dass stets $n_x * n_y$ Tags im Sichtfeld sind, und die Tags können auf bis zu $n_x * n_y$ unterschiedlichen Ebenen angeordnet sein bzw. werden.

Zum Beispiel können die Markierungen drei verschiedenen Ebenen wie in **Fig. 13e** dargestellt zugeordnet werden. Fig. 13e zeigt ein gleichmäßiges Muster, dass sich nach vier Markierungen in x- und y-Richtungen wiederholt, kann also entsprechend fortgesetzt werden. "0" entspricht hierbei der Nullebene/Fokusebene, "+" der gegenüber der Nullebene erhöhten Ebene und "-" der vertieften Ebene. Die Nullebene wird hier also als Rahmen deutlich häufiger verwendet als die anderen beiden Ebenen. Das Sichtfeld kann dann z.B. so gewählt werden, dass stets vier Markierungen in x und vier in y-Richtung vollständig zu sehen sind (also insgesamt stets 16 Markierungen), wodurch sichergestellt ist, dass stets mindestens eine Markierung jeder der drei Ebenen zu sehen ist.

**Posenbestimmung basierend auf Bild einer Markierung**

Wie bereits angedeutet, können die Markierungen bzw. Referenzmarker dazu genutzt werden, um damit die Pose (Position und Orientierung) der Kinematik zu bestimmen. Hierfür wird ein Bild des Markierungsbereichs, genauer gesagt ein Bild des aktuell sichtbaren Ausschnitts des Markierungsbereichs, entsprechend dem momentanen Sichtfeld der Kamera aufgenommen.

Es ist hierzu zunächst angemerkt, dass sich der Begriff **Pose der Kinematik** in der vorliegenden Anmeldung z.B. auf die Pose eines *Endeffektors* der jeweiligen Kinematik bezieht. Der Endeffektor bezeichnet zum Beispiel das letzte Glied einer kinematischen Kette. Es ist in der Regel die Komponente oder Baugruppe zur Ausführung der eigentlichen Handhabungsaufgabe. Anders gesagt, bewirkt der Effektor die eigentliche Interaktion des Roboters (d.h., der Kinematik) mit seiner Umwelt. Bei einem Endeffektor kann es sich insbesondere um ein Werkzeug, einen Werkzeugträger, einen Greifer, oder eine zu bewegende Plattform (z.B., bei Hexapoden) handeln. Des Weiteren ist anzumerken, dass diejenige Pose der Kinematik bestimmt wird, die die Kinematik zum Zeitpunkt der Aufnahme des Bildes angenommen hat.

Genauer gesagt, können die Markierungen derart beschaffen sein, dass sich die Pose der Parallelkinematik basierend auf einem mit der Kamera aufgenommen Bild des Markierungsbereichs bestimmen lässt, falls das Bild mindestens n beliebige der Markierungen in einer Richtung enthält, wobei *n* größer gleich 1 ist. Insbesondere für *n* = 1 gilt für jede der Markierungen, dass sich die Pose der Parallelkinematik basierend auf einem mit der Kamera aufgenommen Bild der Markierung bestimmen lässt. Anders gesagt, kann es für die Posenbestimmung ausreichen, dass sich auf dem aufgenommenen Bild eine einzige beliebige Markierung befindet. Das Bild enthält also unter Umständen keine weiteren Markierungen als diese eine Markierung und unabhängig davon, welche der Markierungen diese eine Markierung ist, lässt sich die Pose bestimmen. Im Allgemeinen, wie oben bereits erklärt, kann es auch ausreichend und/oder notwendig sein, dass sich auf dem Bild des Markierungsbereichs mindestens *n* Markierungen in einer Richtung befindet, wobei n auch größer als eins sein kann. Wie zuvor ist auch in diesem Fall egal welche *n* Markierungen sich auf dem Bild in der Richtung befinden (solange es mindestens *n* in der entsprechenden Richtung sind und, wie oben bereits erklärt, in der anderen Richtung auch ausreichend viele Markierungen zu sehen sind).

Hierfür wird die bekannte Position des Sensors bzw. der Kamera verwendet, die das Bild aufgenommen hat. Ebenso kann die Differenzierbarkeit zwischen den einzelnen Tags, die eine eindeutige Identifikation (Familie und Individuum) ermöglicht, wodurch ggf. mehrere Tags auf einem Bild erkannt und unterschieden werden können, verwendet werden. Ferner kann verwendet werden, dass sich die Lage einer Markierung im Raum (Position und Orientierung) bezüglich der Kamera basierend auf dem aufgenommenen Bild bestimmen lässt. Die bekannte Lage der einzelnen Markierungen auf dem Array bzw. auf der Kinematik kann dann genutzt werden, um aus der Lage eines einzelnen Tags auf die genaue Lage (Position und Orientierung) der beweglichen Plattform zu schließen. Aus einem einzelnen Bild kann so die Lage (Position und Rotation) der aufgenommenen Markierung(en) bezüglich der Kamera bestimmt werden und, unter Verwendung der bekannten Position/Orientierung der Kamera sowie der Lage der Markierung auf der Kinematik, somit die Pose der Kinematik. Es ist somit eine absolute Lagebestimmung z.B. der beweglichen Plattform von Hexapoden möglich. Markierungen die dies ermöglichen sind insbesondere die bereits erwähnten AprilTags.

Die Lageerkennung mittels AprilTags kann automatisiert in mehreren Schritten stattfinden. Ein beispielhaftes, aus 9 Schritten bestehendes Verfahren zu AprilTag-Erkennung und Bestimmung der Pose des Tags bzgl. der Kamera ist im Folgenden dargestellt:

Schritt 1 ("*Decimate*"): Das mit der Kamera aufgenommene Bild wird um einen beliebigen, zur Laufzeit festlegbaren Faktor N verkleinert. Dabei wird nur jede N-te Zeile und Spalte in ein neues Bild kopiert, welches in den folgenden Schritten weiterverarbeitet wird. Das Original wird in den Schritten *"Refinement"* und *"Decode"* wieder benötigt.

Schritt 2 ("*BlurSharpen*"): In diesem Schritt kann das verkleinerte Bild entweder mit einem Gauß-Filter weichgezeichnet oder geschärft werden. Die Stärke des Filters kann durch einen vor dem Start festlegbaren Parameter einstellbar sein. Das Vorzeichen des Parameters bestimmt, ob weichgezeichnet oder geschärft wird.

Schritt 3 ("*Threshold*"): Es erfolgt eine Segmentierung in helle und dunkle Bereiche, sowie Bereiche mit wenig Kontrast. Dazu kann ein lokales Schwellwertverfahren genutzt werden. Zunächst wird das Bild in vier mal vier Pixel große Kacheln aufgeteilt, deren Minima und Maxima jeweils ein neues Bild ergeben. Das Minima-Bild wird erodiert und das Maxima-Bild dilatiert. Der Schwellwert berechnet sich dann aus dem Mittelwert zwischen Minimum und Maximum. Falls die Differenz zu klein ist, ist der Kontrast nicht ausreichend.

Schritt 4 (*"Connected Components Labeling")*: Zusammenhängende Segmente werden zu Komponenten zusammengefasst und bekommen ein eindeutiges Label zugeordnet. Dazu kann eine UnionFind-Datenstruktur benutzt werden.

Schritt 5: (Gradient Cluster): In diesem Schritt werden alle Subpixel erfasst, die sich auf der Grenze zwischen einer hellen und einer dunklen Komponente befinden (Kantenpixel). Dabei wird die Achter-Nachbarschaft verwendet. Für jede Komponentenkombination wird eine eigene Liste mit den Subpixel geführt, die die Position und die Kantenrichtung speichert. Es wird eine Hash-Tabelle genutzt, um die Daten der passenden Liste zuzuordnen.

Schritt 6 ("*Quad*"): Zunächst wird der Mittelpunkt eines Kantenzugs mithilfe einer Bounding-Box, die alle Pixel der Liste umspannt, ermittelt. Dann werden die Pixel nach dem Winkel um den Mittelpunkt sortiert und mehrfache Einträge für eine Position entfernt. Anschließend sucht der Algorithmus nach den Eckpunkten des Vierecks (hier ist die Markierung als viereckig angenommen). Dazu wird eine Gerade an ein Fenster, das aus aufeinanderfolgenden Kantenpixeln besteht, angepasst. Dieses wird über die gesamte Folge geschoben. An den Stellen, an denen die größten Anpassungsfehler auftreten, sind die Eckpunkte der Markierung. Am Ende werden Geraden an die Abschnitte zwischen den Eckpunkten angepasst und die Schnittpunkte ergeben dann die finalen Eckpunkte der Vierecke.

Schritt 7 ("*Refinement*"): Mithilfe des Originalbildes werden die Kanten der gefundenen Vierecke erneut abgetastet, um so die Genauigkeit zu erhöhen, die durch die Verkleinerung des Bildes beeinträchtigt wurde. Der Algorithmus sucht an Stellen, die gleichmäßig auf der Kante verteilt sind, nach dem größten Gradienten entlang der Normalen. Die Anzahl der Stellen beträgt ein Achtel (für $t_b = 8$) der Kantenlänge. Dadurch ergeben sich Stützstellen für eine erneute Berechnung von Geraden entlang der Kante, deren Schnittpunkte die neuen Eckpunkte ergeben.

Schritt 8 ("*Decode*"): Zuerst wird die Homografie zwischen den Bildkoordinaten und den erkannten Vierecken (Markierungen) berechnet. Anhand dieser werden Abtastpunkte in das Originalbild projiziert. Die Abtastpunkte am Rand des Tags haben eine bekannte Farbe (schwarz/weiß). Dadurch kann ein Modell des Farbverlaufs erstellt werden, aus dem die Schwellwerte für die eigentlichen Datenpunkte generiert werden. Die Tag-Familie gibt Informationen darüber an, wo sich die bekannten Punkte und die Datenpunkte befinden. Die Decodierung einer gültigen ID gibt auch die Ausrichtung des Tags an.

Schritt 9 ("*Pose Estimation*"): Bei diesem Schritt werden die Kameraparameter genutzt. Nachdem zuvor die Homografie berechnet wurde, kann damit auch die Position und Drehung relativ zur Kamera bestimmt werden. Mithilfe eines iterativen Verfahrens, werden die Rotationsmatrix und der Translationsvektor berechnet.

### *Beispiel mit numerischen Werten*

In der folgenden Werte sind nochmal die meisten der hier erwähnten Parameter zusammen mit beispielhaften Werten aufgeführt.

### *Arbeitsbereich:*

Der Abstand $g_{fp}$ des Objektivs bzw. der vorderen Linse zur Fokusebene (engl. Focal plane) kann z.B. messtechnisch ermittelt werden. Er beschreibt den Abstand zwischen Objektiv und AprilTag-Array bei dem dieses scharf erfasst wird. Bei einer Stellweite des Hexapoden in z-Richtung von $S_z$ ergibt sich demnach ein Arbeitsbereich von $g_{fp} \pm S_z$.

$$g_{min} = g_{fp} - S_z$$

$$g_{max} = g_{fp} + S_z$$

$$g_{min} \leq g \leq g_{max}$$

Sind die Stellweiten des parallelen Mechanismus in x-, y- und z-Richtung gegeben mit $S_x = 17\ mm$, $S_y = 16\ mm$, bzw. $S_z = 6,5\ mm$, so ergibt sich bei einem beispielhaftem Abstand $g_{fp} = 20mm$ ein Arbeitsbereich $g_{min} \leq g \leq g_{max}$ von:

$$g_{min} = g_{fp} - S_z = 20\ mm - 6,5\ mm = 13,5\ mm$$

$$g_{max} = g_{fp} + S_z = 20mm + 6,5\ mm = 26,5\ mm$$

**Kamera und Sichtfeld:**

Durch die Kamera seien ferner folgende Parameter gegeben:

Brennweite $f$ = 8 mm
Pixelgröße $px$ = 3,45 $\mu m$
Sensorabmessung in x-Richtung $Sensor_x$ = 8,446 mm
Sensorabmessung in y-Richtung $Sensor_y$ = 7,066 mm

Für den minimalen und maximalen Abstand können daraus die Abmessungen des Sichtfelds (FOV) aus der Kameraparametern berechnet werden. Für das Sichtfeld bei minimalem Arbeitsabstand $g_{min}$ ergibt sich

$$FOV_x^{min} = \left(\frac{g_{min}}{f} - 1\right) * Sensor_x = \left(\frac{13,5\ mm}{8\ mm} - 1\right) * 8,446\ mm = 5,81\ mm$$

$$FOV_y^{min} = \left(\frac{g_{min}}{f} - 1\right) * Sensor_y = \left(\frac{13,5\ mm}{8\ mm} - 1\right) * 7,066\ mm = 4,86\ mm$$

Ebenso kann das Sichtfeld bei maximalem Arbeitsabstand $g_{max}$ bestimmt werden:

$$FOV_x^{max} = \left(\frac{g_{max}}{f} - 1\right) * Sensor_x = \left(\frac{26,5\ mm}{8\ mm} - 1\right) * 8,446\ mm = 19,53\ mm$$

$$FOV_y^{max} = \left(\frac{g_{max}}{f} - 1\right) * Sensor_y = \left(\frac{26,5\ mm}{8\ mm} - 1\right) * 7,066\ mm = 16,34\ mm$$

**Maße des Markierungsbereichs**

Aus obigen beispielhaften Werten ergibt sich für die Maße des Markierungsbereichs:

$$ATA_x = FOV_{x,max} + 2 * S_x = 19,53\ mm + 2*17\ mm = 53,53\ mm$$

$$ATA_y = FOV_{y,max} + 2 * S_y = 16,34\ mm + 2*16\ mm = 48,34\ mm$$

**Taggröße:**

Die minimale Größe eines AprilTags wird dann in Abhängigkeit des maximalen Arbeitsabstands berechnet zu:

$$t_m \geq px * p * t_b * \left(\frac{g_{max}}{f} - 1\right) \geq 3,45\ \mu m * 5 * 8 * \left(\frac{26,5\ mm}{8\ mm} - 1\right) \geq 0,32\ mm$$

**Abstande zwischen AprilTags:**

Nach Vorgabe von $n_x$ und $n_y$ wird der Abstand der AprilTags bei minimalem Sichtfeld $FOV^{min}$ berechnet gemäß:

$$D_x = \frac{FOV_x^{min} - (n_x + 1) * t_m}{n_x} \qquad D_y = \frac{FOV_y^{min} - (n_y + 1) * t_m}{n_y}$$

Setzt man die bekannten Abhängigkeiten für $FOV_x^{min}$ und $t_m$ in die obige Gleichung ein, so ergibt sich der Abstand zwischen den AprilTags in allgemeiner Form zu:

$$D_x = \frac{FOV_x^{min} - (n_x + 1) * t_m}{n_x}$$

$$= \frac{\left(\frac{g_{fp} - S_z}{f} - 1\right) * Sensor_x - (n_x + 1) * px * p * t_b * \left(\frac{g_{fp} + S_z}{f} - 1\right)}{n_x}$$

Sind $n_x = n_y = 1$ als gewünschte Anzahl an AprilTags in x- bzw. y-Richtung vorgegeben, ergibt sich mit obigen Beispielwerten somit numerisch:

$$D_x = \frac{5,81\ mm - (1 + 1) * 0,32\ mm}{1} = 5,17\ mm$$

$$D_y = \frac{4,86\ mm - (1 + 1) * 0,32\ mm}{1} = 4,22\ mm$$

Für $n_x = n_y = 3$ würden sich hingegen $D_x = 1,51$ mm und $D_y = 1,194$ mm ergeben.

Unter Berücksichtigung der Rotation verkürzen sich die Abstände für $n_x = n_y = 1$ auf:

$$D_x = D_y = D = \frac{4,86\ mm - (1 + 1) * 0,32\ mm}{\sqrt{2}} = 2,984\ mm$$

Zusammengefasst, betrifft die vorliegende Erfindung das Parallelkinematiken sowie Verfahren zum Herstellen von Parallelkinematiken. Eine erfindungsgemäße Parallelkinematik umfasst wechselseitig unterscheidbare Markierungen, die in einem Markierungsbereich auf der Parallelkinematik angebracht sind. Der Markierungsbereich ist ein mit der Pose der Kinematik mitbewegter Bereich der Kinematik.

Gemäß einem Aspekt der vorliegenden Erfindung sind die Markierungen in einem Abstand in einer Richtung angebracht, der sicherstellt, dass stets $n$ Markierungen vollständig in der Richtung zu sehen ist, und die Pose der Parallelkinematik lässt sich basierend auf einem mit der Kamera aufgenommen Bild bestimmen, das mindestens $n$ Markierungen in der Richtung enthält. Ein entsprechendes Anbringungsverfahren betrifft das entsprechende Anbringen von Markierungen.

Gemäß einem anderen Aspekt der vorliegenden Erfindung sind die Markierungen in einem Abstand angebracht, der sicherstellt, dass $n$ oder mehr Markierungen vollständig in einer Richtung zu sehen sind, die Markierungen sind in unterschiedlichen Ebenen angebracht, und die Pose der Parallelkinematik lässt sich basierend auf einem mit der Kamera aufgenommen Bild bestimmen, das mindestens $n$ beliebige Markierungen in der Richtung enthält. Ein entsprechendes Anbringungsverfahren betrifft das entsprechende Anbringen von Markierungen.

**Patentansprüche**

1. Eine Anordnung mit einer Parallelkinematik und Mitteln zur Bestimmung der Pose der Parallelkinematik, umfassend:

   eine Kamera (110) und einen Markierungsbereich (150) mit wechselseitig unterscheidbaren Markierungen, wobei die Kamera (110) dazu eingerichtet ist, den Markierungsbereich (150) bei unterschiedlichen Posen der Parallelkinematik zu beobachten, wobei
   die Mittel zu Bestimmung der Pose der Parallelkinematik dazu eingerichtet sind, die Pose der Parallelkinematik basierend nur auf mit der Kamera (110) aufgenommenen Bildern des Markierungsbereichs zu bestimmen, falls eines der Bilder mindestens $n$ beliebige der Markierungen in einer Richtung enthält, wobei $n$ größer gleich 1 ist; wobei
   ein Abstand, $D$, zwischen je zwei in der Richtung benachbarten Markierungen folgender Formel genügt:

   $$\frac{FOV_{\min} - (n+2) * t_m}{n+1} < D \le \frac{FOV_{\min} - (n+1) * t_m}{n},$$

   wobei

$t_m$ die Länge einer der Markierungen ist,
$FOV_{min}$ eine Länge des Ausschnitts des Markierungsbereichs (150) ist, der bei einem Minimalabstand der Kamera (110) von dem Markierungsbereich (150) in das Sichtfeld (400) der Kamera (110) fällt, wobei der Minimalabstand ein minimaler Abstand unter den Abständen ist, die der Markierungsbereich (150) von der Kamera (110) durch Änderungen der Pose entfernt sein kann.

2. Die Parallelkinematik gemäß Anspruch 1, wobei
die Länge $FOV_{min}$ folgender Gleichung genügt:

$$FOV_{min} = \left(\frac{g_{min}}{f} - 1\right) l_{Sensor},$$

wobei

$g_{min}$ der Minimalabstand ist, $l_{Sensor}$ eine Länge des Sensors der Kamera (110) ist, und f eine Brennweite der Kamera (110) ist.

3. Die Parallelkinematik gemäß Anspruch 1 oder 2, wobei
die Markierungen gemäß einem regelmäßigen Anordnungsschema in dem Markierungsbereich (150) angeordnet sind.

4. Die Parallelkinematik gemäß einem der Ansprüche 1 bis 3, wobei

der Markierungsbereich (150) an einer Unterseite einer Arbeitsplattform (140) der Parallelkinematik angebracht ist und die Kamera (110) in oder an einer Basis (120) der Parallelkinematik angebracht und auf die Unterseite der Arbeitsplattform (140) gerichtet ist, oder
der Markierungsbereich (150) in oder an der Basis (120) der Parallelkinematik angebracht ist, und die Kamera (110) an einer Unterseite der Arbeitsplattform (140) angebracht und auf die Basis (120) der Parallelkinematik gerichtet ist

5. Die Parallelkinematik gemäß einem der Ansprüche 1 bis 4, wobei
die Länge $t_m$ einer Markierung folgender Gleichung genügt:

$$t_m \geq px * p * t_b * \left(\frac{g_{max}}{f} - 1\right),$$

wobei

p ein von der Kamera (110) abhängiger Wert größer gleich 2 und kleiner gleich 5 ist,
$px$ die Länge, die einem Abtastwert der Kamera (110) entspricht ist,
$g_{max}$ ein maximaler Abstand unter den Abständen ist, die der Markierungsbereich (150) von der Kamera (110) durch Änderungen der Pose entfernt sein kann,
$f$ eine Brennweite der Kamera (110) ist, und
$t_b$ die Anzahl an Informationseinheiten der Markierung ist.

6. Die Parallelkinematik gemäß einem der Ansprüche 1 bis 5, wobei
es sich bei den Markierungen um Referenzmarker, wie zum Beispiel ARToolKit-Markierungen, ArUco-Markierungen, QR-Codes oder insbesondere AprilTag-Markierungen handelt.

7. Die Parallelkinematik gemäß einem der Ansprüche 1 bis 6, wobei

jede der Markierungen aus mehreren Quadraten besteht, wobei
die Quadrate den Informationseinheiten entsprechen und in jedem Quadrat ein Bit kodierbar ist.

8. Ein Verfahren zum Anbringen von wechselseitig unterscheidbaren Markierungen an eine Parallelkinematik einer Anordnung nach einem der Ansprüche 1 bis 7 in einem Markierungsbereich (150), so dass sich die Pose der Parallelkinematik basierend nur auf mit einer Kamera aufgenommenen Bildern des Markierungsbereichs bestimmen lässt, falls eines der Bilder mindestens eine vorgegebene Anzahl, $n$, der Markierungen in einer Richtung enthält, wobei $n$ größer gleich 1 ist, das Verfahren umfassend:

Bestimmen (S310) eines Abstands, $D$, zwischen je zwei in der Richtung benachbarten Markierungen gemäß folgender Formel:

$$\frac{FOV_{\min} - (n+2) * t_m}{n+1} < D \leq \frac{FOV_{\min} - (n+1) * t_m}{n},$$

wobei

$t_m$ die Länge einer der Markierungen ist,

$FOV_{\min}$ eine Länge des Ausschnitts des Markierungsbereichs (150) ist, der bei einem Minimalabstand der Kamera (110) von dem Markierungsbereich (150) in das Sichtfeld (400) der Kamera (110) fällt, wobei

der Minimalabstand ein minimaler Abstand unter den Abständen ist, die der Markierungsbereich (150) von der Kamera (110) durch Änderungen der Pose entfernt sein kann; und

Anbringen (S320) jeweils benachbarter Markierungen in dem bestimmten Abstand.

9. Eine Anordnung mit einer Parallelkinematik und Mitteln zur Bestimmung der Pose der Parallelkinematik, umfassend:

eine Kamera (110) und einen Markierungsbereich (150) mit wechselseitig unterscheidbaren Markierungen, wobei die Kamera (110) dazu eingerichtet ist, den Markierungsbereich (150) bei unterschiedlichen Posen der Parallelkinematik zu beobachten, wobei

ein Abstand, $D$, zwischen je zwei in einer Richtung benachbarten Markierungen folgender Formel genügt:

$$D \leq \frac{FOV_{\min} - (n+1) * t_m}{n},$$

wobei

$t_m$ die Länge einer der Markierungen ist,

$FOV_{\min}$ eine Länge des Ausschnitts des Markierungsbereichs (150) ist, der bei einem Minimalabstand der Kamera von dem Markierungsbereich (150) in das Sichtfeld (400) der Kamera fällt, wobei

der Minimalabstand ein minimaler Abstand unter den Abständen ist, die der Markierungsbereich (150) von der Kamera durch Änderungen der Pose entfernt sein kann,

sich die Markierungen in unterschiedlichen Ebenen befinden, und

die Mittel zu Bestimmung der Pose der Parallelkinematik dazu eingerichtet sind, die Pose der Parallelkinematik basierend nur auf mit der Kamera aufgenommenen Bildern zu bestimmen, falls eines der Bilder mindestens eine Anzahl, $n$, beliebige der Markierungen in der Richtung enthält, wobei $n$ größer gleich 2 ist.

10. Ein Verfahren zum Anbringen von wechselseitig unterscheidbaren Markierungen an eine Parallelkinematik einer Anordnung nach Anspruch 9 in einem Markierungsbereich (150), so dass sich die Pose der Parallelkinematik basierend nur auf mit einer Kamera aufgenommenen Bildern des Markierungsbereichs bestimmen lässt, falls eines der Bilder mindestens eine vorgegebene Anzahl, $n$, der Markierungen in einer Richtung enthält, wobei $n$ größer gleich 2 ist, das Verfahren umfassend:

Bestimmen (S310) eines Abstands, $D$, zwischen je zwei in der Richtung benachbarten Markierungen gemäß folgender Formel:

$$D \leq \frac{FOV_{\min} - (n+1) * t_m}{n},$$

wobei

$t_m$ die Länge einer der Markierungen ist,

$FOV_{\min}$ eine Länge des Ausschnitts des Markierungsbereichs (150) ist, der bei einem Minimalabstand der Kamera von dem Markierungsbereich (150) in das Sichtfeld (400) der Kamera fällt, wobei

der Minimalabstand ein minimaler Abstand unter den Abständen ist, die der Markierungsbereich (150) von der Kamera durch Änderungen der Pose entfernt sein kann; und

Anbringen (S320) jeweils in der Richtung benachbarter Markierungen in dem bestimmten Abstand, wobei die Markierungen so angebracht werden, dass sie sich in unterschiedlichen Ebenen befinden.

## Claims

1. An arrangement with a parallel kinematic system and means for determining the pose of the parallel kinematic system comprising:

   a camera (110) and a marking region (150) with mutually distinguishable markings, wherein the camera (110) is configured to observe the marking region (150) in different poses of the parallel kinematic system, wherein the means for determining the pose of the parallel kinematic system are configured to determine the pose of the parallel kinematic system based only on images of the marking region captured by the camera (110) if one of the images contains at least a number n of any of the markings in a direction, wherein n is greater than or equal to 1, where

   a distance, $D$, between any two markings that are adjacent in the direction satisfies the following formula:

   $$\frac{FOV_{\min} - (n+2) * t_m}{n+1} < D \leq \frac{FOV_{\min} - (n+1) * t_m}{n},$$

   wherein

   $t_m$ is the length of one of the markings,
   $FOV_{\min}$ is a length of the section of the marking region (150) which falls into the field of view (400) of the camera (110) at a minimum distance of the camera from the marking region (150), wherein the minimum distance is a minimum distance among the distances that the marking region (150) can be away from the camera (110) due to pose changes.

2. The parallel kinematic system according to claim 1, wherein the length $FOV_{\min}$ satisfies the following equation:

   $$FOV_{\min} = \left(\frac{g_{\min}}{f} - 1\right) l_{\text{Sensor}},$$

   wherein
   $g_{\min}$ is the minimum distance, $l_{\text{Sensor}}$ is a length of the sensor of the camera (110), and $f$ is a focal distance of the camera (110).

3. The parallel kinematic system according to claim 1 or 2, wherein the markings are arranged in the marking region (150) according to a regular arrangement pattern.

4. The parallel kinematic system according to any of claims 1 to 3, wherein

   the marking region (150) is attached to an underside of a work platform (140) of the parallel kinematic system and the camera (110) is attached in or on a base (120) of the parallel kinematic system and is directed towards the underside of the work platform (140), or
   the marking region (150) is attached in or on the base (120) of the parallel kinematic system and the camera (110) is attached to an underside of the work platform (140) and is directed towards the base (120) of the parallel kinematic system.

5. The parallel kinematic system according to any of claims 1 to 4, wherein the length $t_m$ of a marking satisfies the following equation:

   $$t_m \geq px * p * t_b * \left(\frac{g_{\max}}{f} - 1\right),$$

   wherein

   $p$ is a value that is dependent on the camera (110), greater than or equal to 2 and less than or equal to 5,
   $px$ is the length that corresponds to a sampling value of the camera (110),
   $g_{\max}$ is a maximum distance among the distances that the marking region (150) can be away from the camera (110) due to pose changes,

*f* is a focal distance of the camera (110), and

$t_b$ is the number of information units of the marking.

6. The parallel kinematic system according to any of claims 1 to 5, wherein
the markings are reference markings, such as for example ARToolKit markings, ArUco markings, QR codes, or in particular AprilTag markings.

7. The parallel kinematic system according to any of claims 1 to 6, wherein

each of the markings consists of several squares, wherein
the squares correspond to the information units and a bit can be encoded in each square.

8. A method for attaching mutually distinguishable markings to a parallel kinematic system of an arrangement according to any of claims 1 to 7 in a marking region (150) so that the pose of the parallel kinematic system can be determined based only on images of the marking region captured by a camera if one of the images contains at least a predetermined number, *n*, of markings in a direction, wherein *n* is greater than or equal to 1, the method comprising: determining (S310) a distance, D, between any two markings that are adjacent in the direction according to the following formula:

$$\frac{FOV_{\min} - (n+2)*t_m}{n+1} < D \leq \frac{FOV_{\min} - (n+1)*t_m}{n},$$

wherein

$t_m$ is the length of one of the markings,
$FOV_{\min}$ is a length of the section of the marking region (150) which falls into the field of view (400) of the camera (110) at a minimum distance of the camera (110) from the marking region (150), wherein
the minimum distance is a minimum distance among the distances that the marking region (150) can be away from the camera (110) due to pose changes, and
attaching (S320) respectively adjacent markings at the determined distance.

9. An arrangement with a parallel kinematic system and means for determining the pose of the parallel kinematic system comprising:

a camera (110) and a marking region (150) with mutually distinguishable markings, wherein the camera (110) is configured to observe the marking region (150) in different poses of the parallel kinematic system, wherein
a distance, *D*, between any two markings that are adjacent in a direction satisfies the following formula:

$$D \leq \frac{FOV_{\min} - (n+1)*t_m}{n},$$

wherein

$t_m$ is the length of one of the markings,
$FOV_{\min}$ is a length of the section of the marking region (150) which falls into the field of view (400) of the camera at a minimum distance of the camera from the marking region (150), wherein
the minimum distance is a minimum distance among the distances that the marking region (150) can be away from the camera due to pose changes,
the markings are disposed in different planes, and
the means for determining the pose of the parallel kinematic system are configured to determine the pose of the parallel kinematic system based only on images captured by the camera if one of the images contains at least a number, *n*, of any of the markings in a direction, wherein n is greater than or equal to 2.

10. A method for attaching mutually distinguishable markings to a parallel kinematic system of an arrangement according to claim 9 in a marking region (150) so that the pose of the parallel kinematic system can be determined based only on images of the marking region captured by a camera if one of the images contains at least a predetermined number, *n*, of markings in a direction, wherein *n* is greater than or equal to 2, the method comprising:

determining (S310) a distance, D, between any two markings that are adjacent in the direction according to the following formula:

$$D \leq \frac{FOV_{\min} - (n+1) * t_m}{n},$$

wherein

$t_m$ is the length of one of the markings,
$FOV_{\min}$ is a length of the section of the marking region (150) which falls into the field of view (400) of the camera at a minimum distance of the camera from the marking region (150), wherein
the minimum distance is a minimum distance among the distances that the marking region (150) can be away from the camera due to pose changes, and
attaching (S320) respectively in the direction adjacent markings at the determined distance, where
the markings are attached such that they are located in different planes.

**Revendications**

1. Dispositif comprenant une cinématique parallèle et des moyens permettant de déterminer la pose de la cinématique parallèle, comprenant :

   une caméra (110) et une région de marquage (150) avec des marquages mutuellement différènciables, dans lequel la caméra (110) est conçue pour observer la région de marquage (150) dans différentes poses de la cinématique parallèle,
   dans lequel les moyens permettant de déterminer la pose de la cinématique parallèle sont conçus pour déterminer la pose de la cinématique parallèle uniquement sur la base d'images de la région de marquage prises avec la caméra (110), si l'une des images contient au moins un nombre n quelconque de marquages dans une direction, dans lequel *n* est supérieur ou égal à 1 ;
   dans lequel une distance, D, entre respectivement deux marquages adjacents dans ladite direction satisfait la formule ci-dessous :

$$\frac{FOV_{\min} - (n+2) * t_m}{n+1} < D \leq \frac{FOV_{min} - (n+1) * t_m}{n},$$

   dans lequel

   $t_m$ est la longueur d'un des marquages,
   $FOV_{\min}$ est une longueur de la section de la région de marquage (150) qui entre dans le champ de vision (400) de la caméra (110) à une distance minimale entre la caméra et la région de marquage (150), dans lequel la distance minimale est une distance minimale parmi les distances auxquelles la région de marquage (150) peut être éloignée de la caméra (110) en raison de modifications de la pose.

2. Cinématique parallèle selon la revendication 1, dans lequel
   la longueur $FOV_{\min}$ satisfait l'équation ci-dessous :

$$FOV_{\min} = \left(\frac{g\min}{f} - 1\right) l_{\text{Sensor}},$$

   dans lequel
   $g_{min}$ est la distance minimale, $l_{\text{Sensor}}$ est une longueur du capteur de la caméra (110), et *f* est une distance focale de la caméra (110).

3. Cinématique parallèle selon la revendication 1 ou 2, dans lequel
   les marquages sont agencés dans la région de marquage (150) selon un schéma d'agencement régulier.

4. Cinématique parallèle selon l'une quelconque des revendications 1 à 3, dans lequel la région de marquage (150) est placée sur une face inférieure d'une plate-forme de travail (140) de la cinématique parallèle et la caméra (110) est placée dans ou sur une base (120) de la cinématique parallèle et est dirigée vers la face inférieure de la plate-forme de travail (140), ou

la région de marquage (150) est placée dans ou sur la base (120) de la cinématique parallèle, et la caméra (110) est placée sur une face inférieure de la plate-forme de travail (140) et est dirigée vers la base (120) de la cinématique parallèle

5. Cinématique parallèle selon l'une quelconque des revendications 1 à 4, dans lequel la longueur $t_m$ d'un marquage satisfait l'équation ci-dessous :

$$t_m \geq px * p * t_b * \left( \frac{g_{max}}{f} - 1 \right),$$

dans lequel

$p$ est une valeur qui dépend de la caméra (110) et est supérieure ou égale à 2 et inférieure ou égale à 5,
$px$ est la longueur correspondant à une valeur d'échantillon de la caméra (110),
$g_{max}$ est une distance minimale parmi les distances auxquelles la région de marquage (150) peut être éloignée de la caméra (110) en raison de modifications de la pose,
$f$ est une distance focale de la caméra (110), et
$t_b$ est le nombre d'unités d'information du marquage.

6. Cinématique parallèle selon l'une quelconque des revendications 1 à 5, dans lequel les marquages sont des marqueurs de référence, par exemple des marquages ARToolKit, des marquages ArUco, des codes QR ou en particulier des marquages AprilTag.

7. Cinématique parallèle selon l'une quelconque des revendications 1 à 6, dans lequel chacun des marquages est constitué de plusieurs carrés,
les carrés correspondent aux unités d'information et un bit peut être codé dans chaque carré.

8. Procédé de placement de marquages mutuellement différenciables au niveau d'une cinématique parallèle d'un dispositif selon l'une quelconque des revendications 1 à 7 dans une région de marquage (150), de sorte que la pose de la cinématique parallèle peut être déterminée en se basant uniquement sur des images de la région de marquage prises avec une caméra, si l'une des images contient au moins un nombre prédéterminé, n, de marquages dans une direction, dans lequel n est supérieur ou égal à 1, le procédé comprenant les étapes consistant à :
déterminer (S310) une distance, D, entre respectivement deux marquages adjacents dans ladite direction, selon la formule ci-dessous :

$$\frac{FOV_{min} - (n+2) * t_m}{n+1} < D \leq \frac{FOV_{min} - (n+1) * t_m}{n},$$

dans lequel

$t_m$ est la longueur d'un des marquages,
$FOV_{min}$ est une longueur de la section de la région de marquage (150) qui entre dans le champ de vision (400) de la caméra (110) à une distance minimale entre la caméra et la région de marquage (150), dans lequel
la distance minimale est une distance minimale parmi les distances auxquelles la région de marquage (150) peut être éloignée de la caméra (110) en raison de modifications de la pose ; et
placer (S320) des marquages respectivement adjacents selon la distance déterminée.

9. Dispositif comprenant une cinématique parallèle et des moyens permettant de déterminer la pose de la cinématique parallèle, comprenant :

une caméra (110) et une région de marquage (150) avec des marquages mutuellement différenciables, dans lequel la caméra (110) est conçue pour observer la région de marquage (150) dans différentes poses de la cinématique parallèle, dans lequel
une distance, $D$, entre respectivement deux marquages adjacents dans une direction satisfait la formule ci-dessous :

$$D \leq \frac{FOV_{\min} - (n+1) * t_m}{n},$$

dans lequel

$t_m$ est la longueur d'un des marquages,
$FOV_{\min}$ est une longueur de la section de la région de marquage (150) qui entre dans le champ de vision (400) de la caméra (110) à une distance minimale entre la caméra et la région de marquage (150), dans lequel la distance minimale est une distance minimale parmi les distances auxquelles la région de marquage (150) peut être éloignée de la caméra (110) en raison de modifications de la pose,
les marquages se trouvent à des niveaux différents, et
les moyens permettant de déterminer la pose de la cinématique parallèle sont conçus pour déterminer la pose de la cinématique parallèle en se basant uniquement sur des images prises avec la caméra, si l'une des images contient au moins un nombre, $n$, de l'un quelconque des marquages dans ladite direction, dans lequel $n$ est supérieur ou égal à 2.

10. Procédé de placement de marquages mutuellement différenciables au niveau d'une cinématique parallèle d'un dispositif selon la revendication 9 dans une région de marquage (150), de sorte que la pose de la cinématique parallèle peut être déterminée en se basant uniquement sur des images de la région de marquage prises avec une caméra, si l'une des images contient au moins un nombre prédéterminé, $n$, de marquages dans une direction, dans lequel $n$ est supérieur ou égal à 2, le procédé comprenant les étapes consistant à :
déterminer (S310) une distance, D, entre respectivement deux marquages adjacents dans ladite direction, selon la formule ci-dessous :

$$D \leq \frac{FOV_{\min} - (n+1) * t_m}{n},$$

dans lequel

$t_m$ est la longueur d'un des marquages,
$FOV_{\min}$ est une longueur de la section de la région de marquage (150) qui entre dans le champ de vision (400) de la caméra à une distance minimale entre la caméra et la région de marquage (150), dans lequel
la distance minimale est une distance minimale parmi les distances auxquelles la région de marquage (150) peut être éloignée de la caméra (110) en raison de modifications de la pose ; et
placer (S320) des marquages respectivement adjacents dans ladite direction selon la distance déterminée, dans lequel
les marquages sont placés de sorte qu'ils se trouvent à des niveaux différents.

AprilTag-Array 150

Kamera 110

Manipulatorplattform 140

Grundplattform 120

**Fig. 1b**

Manipulatorplattform 140

Objektiv 130

Kamera 110

Grundplattform 120

**Fig. 1a**

Manipulatorplattform 140

AprilTag-Array 150

Objektiv 130

Grundplattform 120

Kamera 110

Fig. 2b

AprilTag-Array 150

Manipulatorplattform 140

Objektiv 130

Grundplattform 120

Kamera 110

Fig. 2a

**Fig. 3**

S310: Bestimmen des Abstands D zwischen zwei benachbarten Markierungen

↓

S320: Anbringen der Markierungen in dem bestimmten Abstand

Markierungsbereich 150

**Fig. 4**

$S_y$

$ATA_y$ $FOV_y$

$FOV_x$

$S_x$

Sichtfeld 400

$ATA_x$

**Fig. 5**

550  570

560

500

510

**Fig. 6**

650  670

660

600

610

EP 4 437 304 B1

Fig. 7b

Fig. 7a

Fig. 8

Fig. 9

Fig. 10

Fig. 11a

Fig. 11b

**Fig. 12**

EP 4 437 304 B1

Markierungen 1350

**Fig. 13b**

Markierungen 1350

**Fig. 13d**

Markierungsbereich 1300

**Fig. 13a**

**Fig. 13c**

Fig. 13e

1470

1460

1450

1440

1430

$\Delta_+$

$\delta_+$

$\delta_-$

$\Delta_-$

$+S_z$

$-S_z$

$g_{fp}$

Markierungsbereich 1300

Kamera 110

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Computer vision-based pose estimation of tensegrity robots using fiducial markers. **MOLDAGALIEVA, AKMARAL et al.** 2019 IEEE/SICE International Symposium on System Integration (Sil). IEEE, 2019